# EUROPEAN PATENT SPECIFICATION

(11) **EP 4 162 473 B1**
(45) Date of publication and mention of the grant of the patent: **28.10.2026**
(21) Application number: 21816957.1
(22) Date of filing: 07.06.2021
(51) Int. Cl.: B64C 13/50, B64C 13/04, B64C 27/56

(54) **AIRCRAFT CONTROL SYSTEM AND METHOD**
FLUGZEUGSTEUERUNGSSYSTEM UND -VERFAHREN
PROCÉDÉ ET SYSTÈME DE COMMANDE D'AÉRONEF

(30) Priority: 05.06.2020 US 202063035416 P
(43) Date of publication of application: 12.04.2023
(60) Divisional application: 26198211.0 / 4 813 835
(73) Proprietor: Joby Aero, Inc., Santa Cruz, CA 95060 (US)
(72) Inventor: ENGLISH, Blake, Santa Cruz, California 95060 (US); DENHAM, James, Santa Cruz, California 95060 (US); PAINES, Justin, Santa Cruz, California 95060 (US)
(74) Representative: Murgitroyd & Company
(86) International application number: PCT/US2021/036132
(87) International publication number: WO 2021/248116

(56) References cited:
- EP-A1- 1 136 628
- EP-B1- 3 011 580
- EP-B1- 3 115 863
- WO-A1-2014/189455
- DE-B- 1 278 846
- GB-A- 2 073 114
- GB-A- 2 491 855
- GB-A- 2 491 855
- US-A- 4 420 808
- US-A- 4 420 808
- US-A- 4 861 269
- US-A- 5 412 299
- US-A- 5 472 156
- US-A1- 2009 178 502
- US-A1- 2009 178 502
- US-A1- 2009 187 292
- US-A1- 2013 133 469
- US-A1- 2014 353 433
- US-A1- 2016 085 257
- US-A1- 2016 085 257
- US-B2- 9 033 284

## Description

### CROSS-REFERENCE TO RELATED APPLICATIONS

This application claims the benefit of US Provisional Application number 63/035,416, filed 05-JUN-2020.

This application is related to US Application Number 16/409,653, filed 10-MAY-2019, and US Application Number 16/708,367, filed 09-DEC-2019.

### TECHNICAL FIELD

This invention relates generally to the aviation field, and more specifically to a new and useful control system and method in the aviation field.

### BACKGROUND

US 2009/187292 A1 concerns an integrated pitch, roll, and yaw inceptor for a control system for an aircraft. The control system comprises a grip, a set of feedback components connected to the grip, and a set of sensors. The set of feedback components transmit a restoring force opposite to a movement of the grip. The set of sensors are capable of detecting pitch input, roll input, and yaw input in response to the movement of the grip.

EP 3 011 580 B1 concerns a control means comprising a grip arranged to be held by a hand, a connection end and a free end arranged opposite to the connection end where the grip is arranged between the connection end and the free end, at least one activation means arranged at at least one of the free end and the grip, where the activation means is intended to be operated with a part of the hand, a thumb or a finger, where the grip is provided with a hand support in order to support a user's hand, and whereby the hand support is pliable such that the control means can be adapted to a user's hand. The present invention concerns also a hand support for a control means.

US 2016/085257 A1 relates to an adjustable grip hand rest in a hand grip for use in controlling machinery. The grip includes a grip body and a hand rest connected to the grip body. The hand rest adjustably slides and rotates with respect the grip body grip. The hand rest includes a first locking part that is configured to engage the grip body to lock the hand rest in a locked position with respect to the grip body such that the hand rest does not slide with respect to the grip body and configured to disengage from the grip body such that the hand rest slidably moves with respect to the grip body. The hand rest includes a second locking part that, when unlocked, allows the hand rest to rotate with respect to the grip body, and that, when locked, prevents the hand rest from rotating with respect to the grip body.

EP 3 115 863 B1 describes a control element whose joystick can not only be pivoted about two pivot axes, but also has as many different proportional actuating elements as possible on its outer surfaces, such as sliders or scroll wheels, and in addition several digital actuating elements such as pressure switches, which can be actuated as required by means of the operator's hand holding the pivoting part, without the need for multiple assignment of these actuating elements and thus the pre-selection of a desired assignment.

US 2013/133469 A1 describes sidestick controller grips that are provided with a base, an elongate column grip extending upwardly from the base, a head at an upper end portion of the grip column, and a thumb rest surface extending laterally and upwardly relative to the column grip. The thumb rest surface may be supported by a concave outwardly extending support wall which joins the thumbrest surface at a generally serpentine edge which may extend generally outwardly convexly from a lower region thereof at the column grip to a convex apex region, and then extends from the apex region generally upwardly and concavely to an upper region thereof at the head.

### SUMMARY

The invention is a system as defined in the appended claims.

### BRIEF DESCRIPTION OF THE FIGURES

FIGURE 1 is a schematic representation of a variant of the system 100.
FIGURE 2A is a diagrammatic representation of a hand viewed from the palmar side.
FIGURE 2B is an isometric representation of a hand illustrating reference planes and directions.
FIGURE 2C is a diagrammatic representation of hand and forearm motions and associated terms.
FIGURE 3A-C are diagrammatic representations of a variant of a hand rest, a variant of a hand rest with a finite number of adjustments, and a variant of a hand rest with infinite adjustments, respectively.
FIGURE 4 is a top view representation of a variant including a hand rest.
FIGURE 5 is a side view representation of a variant including a hand rest.
FIGURE 6 depicts an example inceptor and associated command axes.
FIGURE 7 depicts an example integration of a variant of the system in an aircraft.
FIGURE 8 depicts an example of forward and hover configurations of a rotor relative to a wing.
FIGURE 9 depicts an example of an aircraft in the hover arrangement.
FIGURE 10 depicts an example of an aircraft in the forward arrangement.
FIGURE 11A and 11B are a top view and rear view of an aircraft illustrating aircraft axes in the hover arrangement and forward arrangement, respectively.
FIGURE 12 is a flowchart diagram of a variant of the method.
FIGURE 13 is a diagram mapping user body parts and motions to input commands.
FIGURE 14 is a schematic representation of a variant of the system.
FIGURE 15A is a force versus displacement graph for an axis of an inceptor which includes a soft stop in a variant of the system.
FIGURE 15B is a displacement versus force graph for an axis of an inceptor which includes a soft stop in a variant of the system.
FIGURE 16 is an example of a conventional inceptor without a hand rest.
FIGURE 17 is a variant of an inceptor with an adjustable hand rest.
FIGURE 18 is a schematic representation of an example hand placement of relative to the inceptor grip.
FIGURE 19 is a side view image of a variant of the system 100.
FIGURE 20 is a side view image of a variant of the system 100 illustrating an example hand placement relative to the inceptor.
FIGURE 21 is an isometric view image of a variant of the system 100.
FIGURES 22A-D are isometric view images of a variant of the system illustrating hand placement relative to the inceptor with the thumb: off of the thumb axis, contacting the thumb axis, displacing the thumb axis away from the user, and displacing the thumb axis towards the user, respectively.
FIGURE 23 is a side view of a variant of the system 100.
FIGURE 24 is an orthogonal view of a variant of the system 100.
FIGURE 25 is an orthogonal view of a variant of the system 100.
FIGURES 26A-E are diagrammatic representations of a variant of an inceptor axis including a soft-stop.
FIGURES 27A-N are views of an inceptor grip in a variant of the system.
FIGURES 28A-B are side views of a variant of an inceptor grip illustrating thumb mobility.
FIGURES 29A-B are 3D views of a variant of an inceptor grip being manipulated by a hand with a relaxed thumb and index finger.

### DESCRIPTION OF THE PREFERRED EMBODIMENTS

The following description of the preferred embodiments of the invention is not intended to limit the invention to these preferred embodiments, but rather to enable any person skilled in the art to make and use this invention.

### 1. Overview.

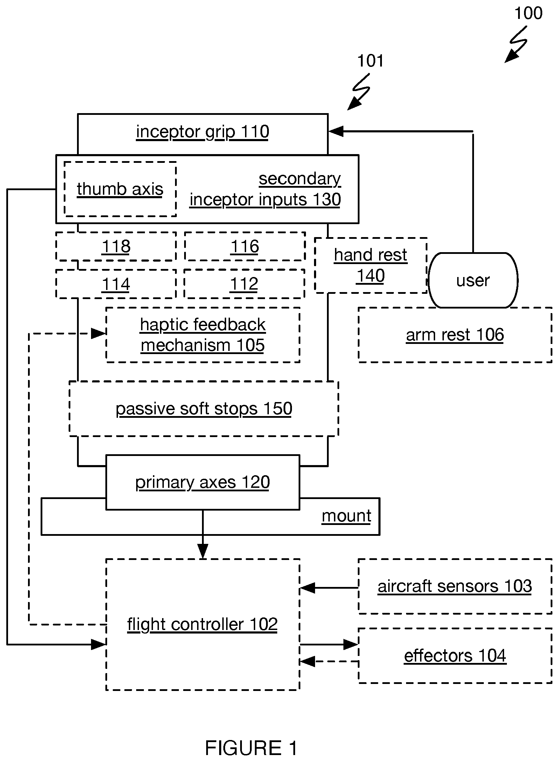

As shown in FIGURE 1, the aircraft control system 100 includes at least one inceptor 101. The aircraft control system can optionally include a flight controller 102, aircraft sensors 103, effectors 104, and a haptic feedback mechanism 105. The inceptor 101 can include: inceptor grip 110, a set of primary inceptor axes 120, and a set of secondary inceptor inputs 130. The inceptor can optionally include a hand rest 140, passive soft stops 150, and/or any other additional elements. However, the aircraft control system 100 can additionally or alternatively include any other suitable components.

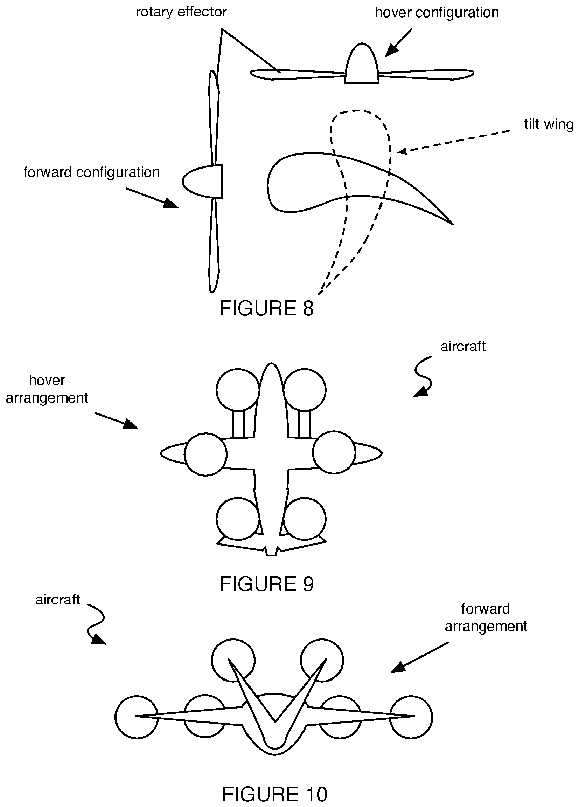

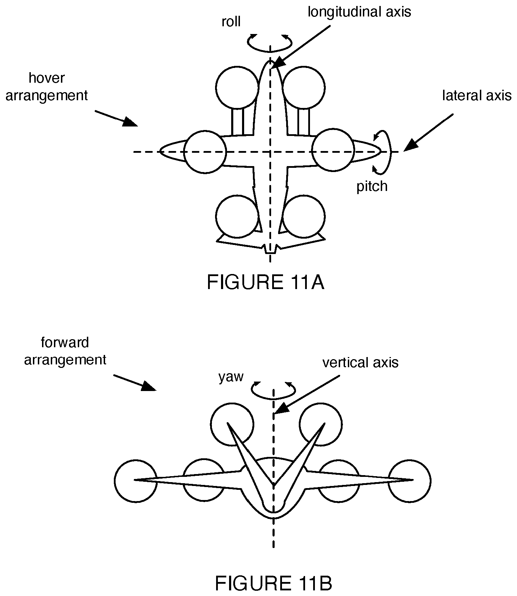

The aircraft control system 100 and/or method is preferably implemented in conjunction with an aircraft (e.g., the system can include an aircraft, the system can be optimized and/or tailored to a specific aircraft, the system can be interchangeable between multiple types of aircraft, etc.). The rotorcraft is preferably a tiltrotor aircraft with a plurality of aircraft propulsion systems (e.g., rotor assemblies, rotor systems, etc.), operable between a forward arrangement (examples are shown in FIGURE 10 and FIGURE 11B) and a hover arrangement (some examples are shown in FIGURES 8, 9, and 11A). However, the rotorcraft can alternatively be a fixed wing aircraft with one or more rotor assemblies or propulsion systems, a helicopter with one or more rotor assemblies (e.g., wherein at least one rotor assembly or aircraft propulsion system is oriented substantially axially to provide horizontal thrust), and/or any other suitable rotorcraft or vehicle propelled by rotors. The rotorcraft preferably includes an all-electric powertrain (e.g., battery powered electric motors) to drive the one or more rotor assemblies, but can additionally or alternatively include a hybrid powertrain (e.g., a gas-electric hybrid including an internal-combustion generator), an internal-combustion powertrain (e.g., including a gas-turbine engine, a turboprop engine, etc.), and any other suitable powertrain.

The aircraft can have any suitable mass (e.g., unloaded mass, loaded mass, maximum takeoff mass, etc.) with any appropriate mass distribution (or weight distribution). The aircraft mass can be: less than 1 kg, 1 kg, 5 kg, 10 kg, 50 kg, 100 kg, 500 kg, 1000 kg, 1250 kg, 1500 kg, 1750 kg, 2000 kg, 2250 kg, 2500 kg, 2750 kg, 3000 kg, 5000 kg, 1000 kg, 20000 kg, less than 1500 kg, 1500-2000 kg, 2000-3000 kg, 3000-5000 kg, 5000-10000 kg, greater than 10000 kg, any suitable range bounded by the aforementioned values, and/or any other appropriate mass. The aircraft is preferably a passenger carrier, configured to transport 1, 2, 3, 5, 7, 10, greater than 10, and/or any suitable number of passengers, however the aircraft can alternately be an unmanned aircraft, a teleoperated passenger aircraft, a remotely piloted aircraft, and/or any other suitable aircraft.

In a specific example, portions of the aircraft control system 100 are integrated into the electric tiltrotor aircraft described in US Application Number 16/409,653, filed 10 - MAY - 2019. However, any other suitable aircraft can be used.

In a specific example of the system, portions of the system are integrated into an electric tiltrotor aircraft including a plurality of tiltable rotor assemblies (e.g., six tiltable rotor assemblies, an example of a tiltable rotor is shown in FIGURE 8). The electric tiltrotor aircraft can operate as a fixed wing aircraft, a rotary-wing aircraft, and in any liminal configuration between a fixed and rotary wing state (e.g., wherein one or more of the plurality of tiltable rotor assemblies is oriented in a partially rotated state). The control system of the electric tiltrotor aircraft in this example can function to command and control the plurality of tiltable rotor assemblies within and/or between the fixed wing arrangement and the rotary-wing arrangement.

The term "axis" as referenced herein preferably refers to a degree of freedom in which a body (e.g., inceptor grip, roller wheel, etc.) is transformable (e.g., rotational degree of freedom, linear degree of freedom, etc.). Such axes can be used to define a physical coordinate frame of the body, which can be associated with and/or constrained by various joints (e.g., revolute joints, spherical joint, bearings, etc.), linkages, hard stops, and/or other mechanisms. Measurements taken by input sensors aligned with said degree of freedom of the body can be used for various inputs. Accordingly, the term "input axis" can likewise interchangeably refer to a sensor coordinate frame (or the range of measurements thereon) and/or the corresponding coordinate axis of the body. However, the term axis and/or input axis can have any other suitable meaning.

An "active" inceptor as referenced herein is an inceptor which can modify the force-feel characteristics in a closed loop response. Force-feel characteristics can include: inertia, force/displacement gradient, damping, breakout force, stick travel, and detent shape configuration parameters in the inceptor control laws. A "passive" inceptor as referenced herein is an inceptor which does not use electrical energy and/or power sources onboard the vehicle to adjust (e.g., by the flight computer) the force-feel characteristics of the inceptor depending on the status of the aircraft. Both active and passive inceptors as referenced herein can include haptic feedback mechanisms, which can, in some variants, be electrically controlled depending on the status of the aircraft.

The term "rotor" as utilized herein, in relation to portions of the system 100, method S100, or otherwise, can refer to a rotor, a propeller, and/or any other suitable rotary aerodynamic actuator. While a rotor can refer to a rotary aerodynamic actuator that makes use of an articulated or semi-rigid hub (e.g., wherein the connection of the blades to the hub can be articulated, flexible, rigid, and/or otherwise connected), and a propeller can refer to a rotary aerodynamic actuator that makes use of a rigid hub (e.g., wherein the connection of the blades to the hub can be articulated, flexible, rigid, and/or otherwise connected), no such distinction is explicit or implied when used herein, and the usage of "rotor" can refer to either configuration, and any other suitable configuration of articulated or rigid blades, and/or any other suitable configuration of blade connections to a central member or hub. Likewise, the usage of "propeller" can refer to either configuration, and any other suitable configuration of articulated or rigid blades, and/or any other suitable configuration of blade connections to a central member or hub. Accordingly, the tiltrotor aircraft can be referred to as a tilt-propeller aircraft, a tilt-prop aircraft, and/or otherwise suitably referred to or described.

The term "substantially" as utilized herein can mean: exactly, approximately, within a predetermined threshold (e.g., within 1%, within 5%, within 10%, etc.), predetermined tolerance, and/or have any other suitable meaning.

### 2. Benefits.

Variations of the technology can afford several benefits and/or advantages.

First, variations of the technology can minimize the number of input mechanisms managed by the user during flight, while maintaining a suitable level of user cognitive workload. In variants, aircraft will lack direct human controls for: power (throttle, propeller control), aircraft configuration (tilt, flaps, landing gear), aircraft control (trim, rudder pedals, brake pedals), and/or other control parameters, but can additionally or alternatively include direct human controls for any of the aforementioned control parameters. For example, the system can include a single inceptor that can control the aircraft across various flight regimes without altering the input axes in which the user inputs commands (e.g., via dynamic remapping between input axes and effector states based on flight regime). A single inceptor can also advantageously reduce mass, system complexity, compactness, and/or aid in ingress and egress from the aircraft. In some variants, the inceptor(s) can self-center to a neutral position associated with stable aircraft flight, allowing the user to incidentally remove a hand(s) from the inceptor in all flight modes (conditions permitting) without destabilizing the aircraft.

Second, variations of the technology can facilitate single-user operation in complex environments and situations. The cognitive workload of the unified command system and method can be tailored to specific tasks: for example, the workload can be adapted to single-user operation of a VTOL-capable aircraft in urban environments (e.g., without the nominal workload substantially exceeding nor falling substantially short of such tasks, to prevent overwork and boredom/disengagement). The cognitive workload can also be oriented toward aeronautical decision making (e.g., which aircraft actions should be commanded) instead of technical decision making (e.g., which aircraft effectors should be in which effector states).

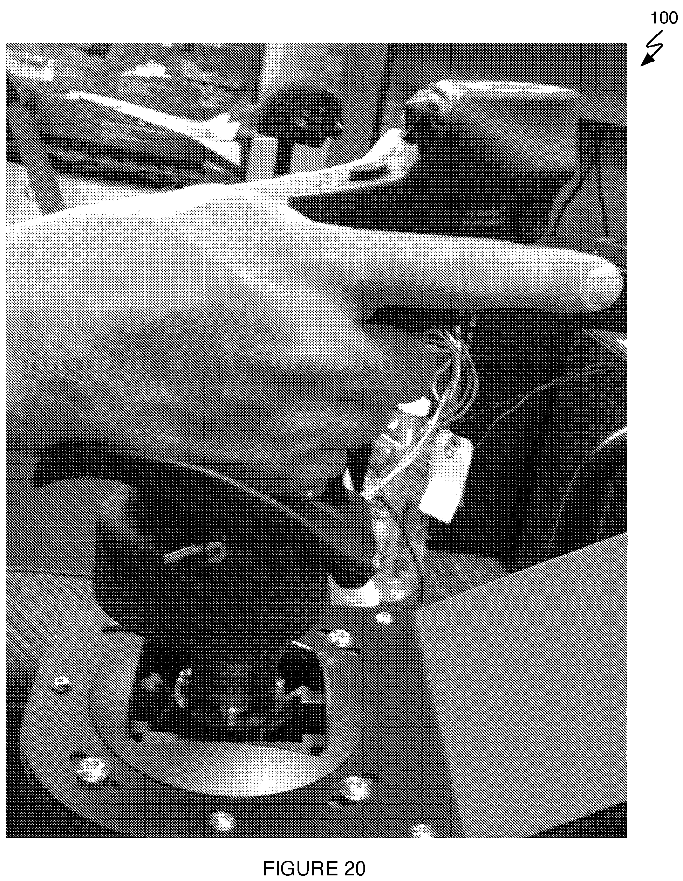

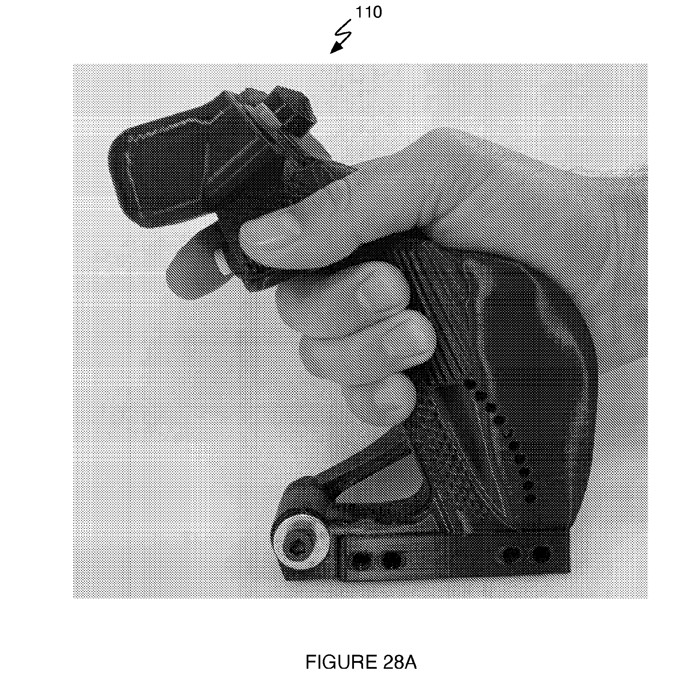

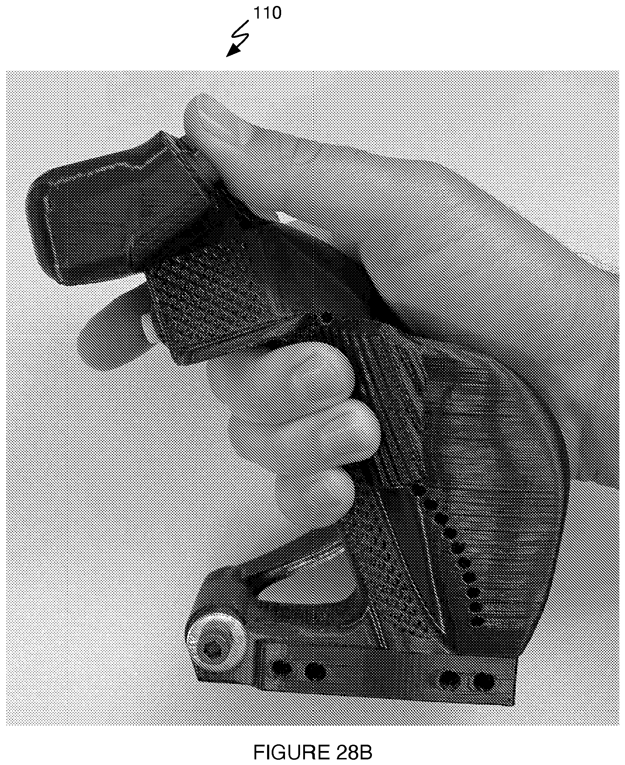

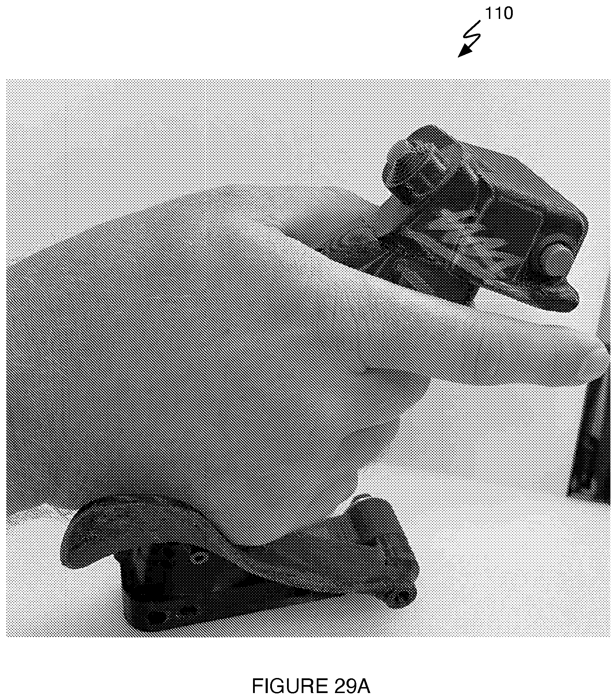

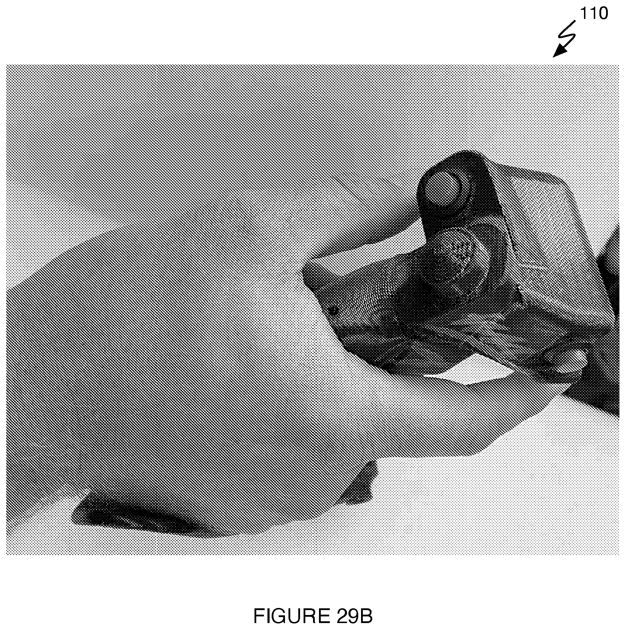

Third, variations of the technology can facilitate operation of an inceptor without the use of the thumb and/or fingers, leaving them free for additional inputs (an example is shown in FIGURE 20, FIGURES 22A-D, FIGURES 28A-B, and FIGURES 29A-B). In variants, multi-axis input requirements can be controlled by free, independent articulation of unique muscle groups (i.e. the one muscle group is not required to control multiple independent axes). In a specific example, articulation of the thumb fully controls vertical rate, and is not required for manipulation of the X-axis, Y-axis, and/or Z-axis of the inceptor. In a second specific example, articulation of the thumb fully controls airspeed rate (e.g., during forward flight), and is not required for manipulation of the X-axis, Y-axis, and/or Z-axis of the inceptor. In a third specific example, articulation of the thumb fully controls longitudinal rate and acceleration (e.g., during hover), and is not required for manipulation of the X-axis, Y-axis, and/or Z-axis of the inceptor. In a fourth specific example, articulation of the thumb fully controls thrust and/or wheel motors (e.g., during ground operation), and is not required for manipulation of the X-axis, Y-axis, and/or Z-axis of the inceptor.

Fourth, variations of the technology can minimize the number of feedback systems managed by the user and/or streamline the management feedback systems, which can reduce the cognitive workload of the pilot. Additionally, feedback systems can prioritize different types of feedback to reduce alarm fatigue and/or low cognitive attentiveness which can result from constant or repetitive exposure to low severity alerts. In particular, haptic feedback requires the least cognitive attentiveness because it is directly associated with the task of manipulation of the input mechanism(s). In variants, haptic feedback can be used to communicate information beyond force feedback on primary axes of the inceptor, thereby reducing the required number of feedback systems and/or achieving an appropriate level of feedback redundancy.

Fifth, variations of the technology utilizing a single inceptor can reduce aircraft mass and/or complexity. Variants of this technology can further reduce weight and complexity by utilizing passive force feedback mechanisms one or more inceptor axes (e.g., with a mustache cam), so that a motor is not required to generate force feedback on each axis - which can further reduce system complexity and mass.

Sixth, variations of the technology can increase the number of inputs available for a single control axis. In variants, actuation in a single direction along a single axis can map to one or more inputs to confer additional control. In a specific variant, pushing through a soft stop can provide an additional pilot input command. In a specific example, pushing through a soft stop can provide a user confirmation to exit an augmented flight mode.

### 3. System.

As shown in FIGURE 1, the aircraft control system 100 includes at least one inceptor 101. The aircraft control system can optionally include a flight controller 102, aircraft sensors 103, effectors 104, and a haptic feedback mechanism 105. The inceptor 101 can include: inceptor grip 110, a set of primary inceptor axes 120, and a set of secondary inceptor inputs 130. The inceptor can optionally include a hand rest 140, passive soft stops 150, and/or any other additional elements. However, the aircraft control system 100 can additionally or alternatively include any other suitable components.

The inceptor 101 functions to receive command input (input command) from a user of the aircraft in the form of physical departures of the inceptor position from a neutral position. The inceptor can be coupled to a flight processor in an indirect, "fly-by-wire" manner, such that no primary control of effectors is available to the user (e.g., all direct effector control is generated by the flight processor in response to received command input from the input mechanism). A fly-by-wire coupling between the inceptor and the flight processor (e.g., and the effectors by way of the flight processor) can enable an inceptor having 2 or more independent axes to be used without complex mechanical flight control linkages between the inceptor and aircraft effectors (e.g., which can limit the number of aircraft motion axes and associated effectors each inceptor can practically control). Alternatively, the inceptor can include direct connections (e.g., primary control) to one or more effectors, and/or any suitable combination of direct and indirect connections.

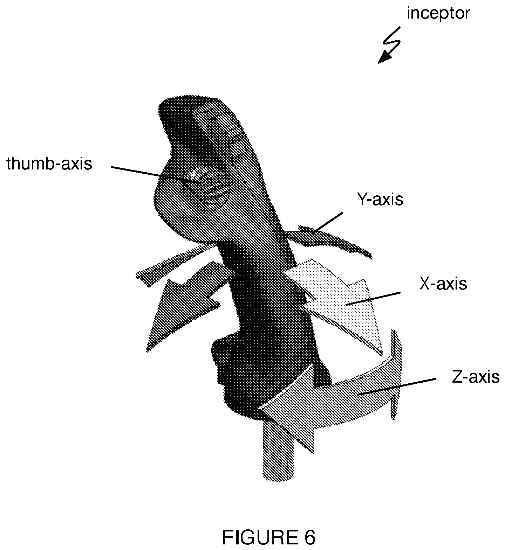

The physical departures of the inceptor can be decomposed in space between the X-axis, Y-axis, Z-axis (a.k.a. twist axis), and A-axis motions as shown by example in FIGURE 6; however, the physical departures from a neutral position can be otherwise suitably decomposed. For each axis, the stick deflection can be measured with absolute or relative position (e.g., displacement, angular position, etc.). The inceptor (e.g., axis of inceptor, base of the inceptor, and/or linkages connected to the inceptor) can include one or more: position transducer, capacitive displacement sensor, eddy-current sensor, hall effect sensor, inductive sensor, laser doppler vibrometer (optical), linear variable differential transformer (LVDT), photodiode array, force sensors, strain gauges, piezo-electric transducer (piezo-electric), position encoders (absolute encoder, incremental encoder, linear encoder, rotary encoder, etc.), potentiometer, proximity sensor (optical), string potentiometer (a.k.a. string pot., string encoder, cable position transducer), ultrasonic sensor, and/or any other suitable devices which can be configured to measure departures of the inceptor. Axes of the inceptor can have the same sensor type or different sensor types. The inceptor can include redundant sensors (e.g., or the same type or different types, force sensors and position sensors, etc.) for each axis or a subset therein. In variants, sensors which can infer inceptor position or pilot commands via force (e.g., strain gauge, force sensor, load cell, etc.) can mitigate a mechanical jam - where a position sensor may be less reliable. However, force sensing can alternatively be the primary sensing modality in one or more axes (e.g., with position sensing as a validating measurement, without position sensing, etc.) and/or may otherwise not be relied upon.

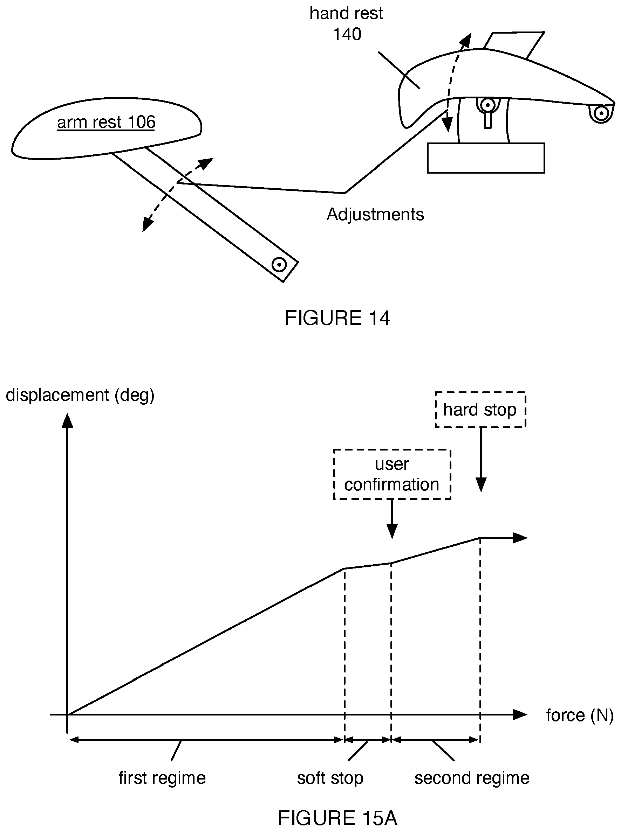

One or more axes of the inceptor can include force feedback mechanisms and/or soft stops -- where the relative force required to displace the inceptor (e.g., slope of force vs displacement curve) increases over a bounded interior range of input forces and/or displacements (an example of a force versus displacement curve for an inceptor axis including a soft stop is shown in FIGURE 15A). Force feedback mechanism can be configured to provide: constant force versus deflection, variable force versus deflection, no force (substantially zero, less than 1 N, etc.) versus deflection, no deflection allowed, change force versus deflection on opposing sides of a soft stop, and/or otherwise operate across any range of deflections of the inceptor. Soft stop mechanisms can be passive (implemented on a passive inceptor or passive inceptor axis) or active (implemented on an active inceptor). Soft stops can be located on one side (e.g., positive or negative) or both sides (e.g., symmetrically, asymmetrically) about a neutral position of the axis. Soft stops can be static, adjustable in hardware, adjustable in software (e.g., mapping sensitivity/envelope is adjustable), defined based on the flight envelope, and/or otherwise configured. Preferably, the inceptor includes at least one soft stop on opposing sides of an axis, but can include no soft stops per side of an axis, multiple soft stops per side of an axis, a different number of soft stops in the positive and negative directions (e.g., for an axis mapping to aircraft pitch in forward) of an axis and/or other suitable number of soft stops. Soft stops can, in variants, serve as a user input type and/or confirmation (e.g., to exit an augmented flight mode, to exceed a safety limit, to engage an augmented flight mode, etc.).

In a first variant, soft stops are configured on an active axis of the inceptor, which can be electro-mechanically actuated by a motor or other powered mechanism (e.g., hydraulic, pneumatic, etc.) to dynamically change the force required to displace the inceptor along the axis.

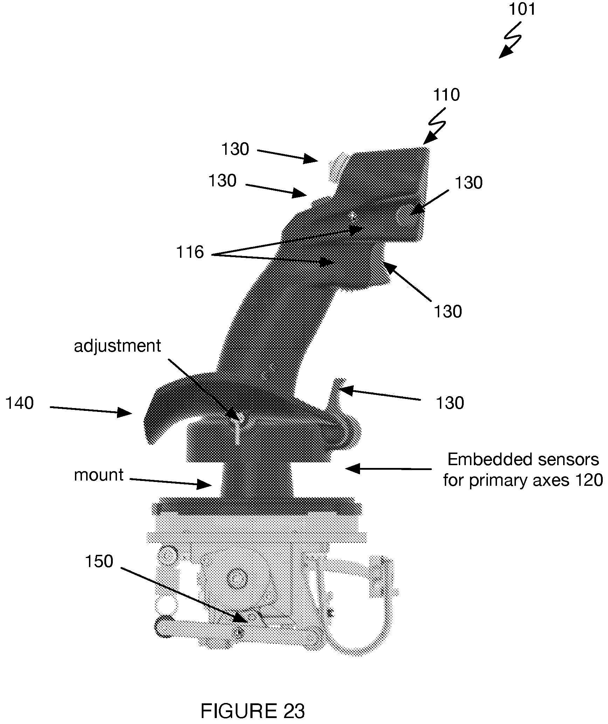

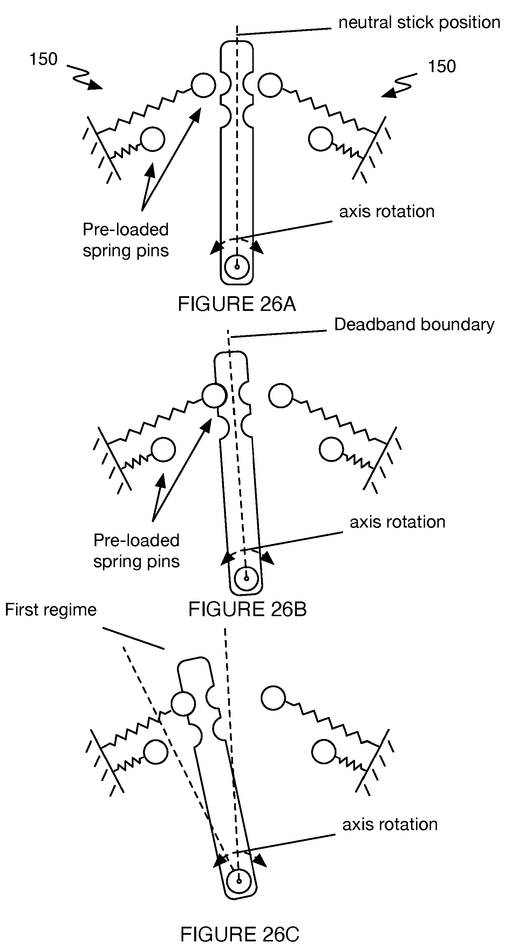

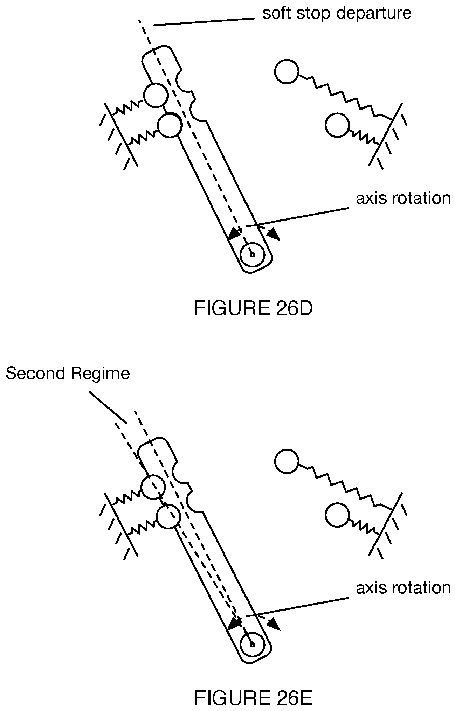

In a second variant, soft stop mechanisms rely on elastic spring/damping effects to increase the slope of the force vs displacement curve over a predetermined range of input forces and/or displacements. Passive soft stops can include cam and/or mechanical linkages connected to a spring such as a: mechanical spring, coil spring, extension spring, torsion spring, constant force spring, Belleville spring, garter spring, flat spring, gas spring, air spring, and/or any other suitable spring. In a specific example, a soft stop mechanism can include a moustache-shaped cam (an example is shown in FIGURE 23). In a second specific example, soft stops can use preloaded springs (e.g., pretensioned, pre-compressed, etc.) with contact pins only engaged for a predetermined portion of displacements about the respective axis. Such instances can provide a force 'step', requiring the entire preload to be countered by a user before the inceptor displaces further along the axis (an example is shown in FIGURES 26A-E). Preloaded spring mechanisms can advantageously provide 'crisp' transitions between regimes along the force vs displacement curve.

In a third variant, soft stops can be used in conjunction with a deadband (e.g., spanning a neutral position of the inceptor) and/or define the boundaries of a deadband. Deadband soft stops can provide any suitable breakout torque (and/or force) thresholds, such as: .5 in-lbs, 1, in-lb, 2 in-lbs, 3 in-lbs, 5 in-lbs, 6 in-lbs, 10 in-lbs, and/or any other suitable threshold in any inceptor axis. Deadband soft stops can be symmetric about the neutral position or asymmetric. In a specific example, wrist flexion can be significantly 'easier' than wrist extension for users utilizing various grip arrangements. In such cases, it can be advantageous to utilize different breakout thresholds in opposing directions along the axis based on the relative ease of rotation. Alternatively, the structure of the inceptor grip can substantially balance the relative ease of rotation in both directions about the axis. In such cases, symmetric breakout thresholds can reduce cross-axis contamination and/or eliminate cross-axis contamination bias in a particular axis (e.g., as a result of asymmetric breakout thresholds).

However, any other suitable soft stop can be used.

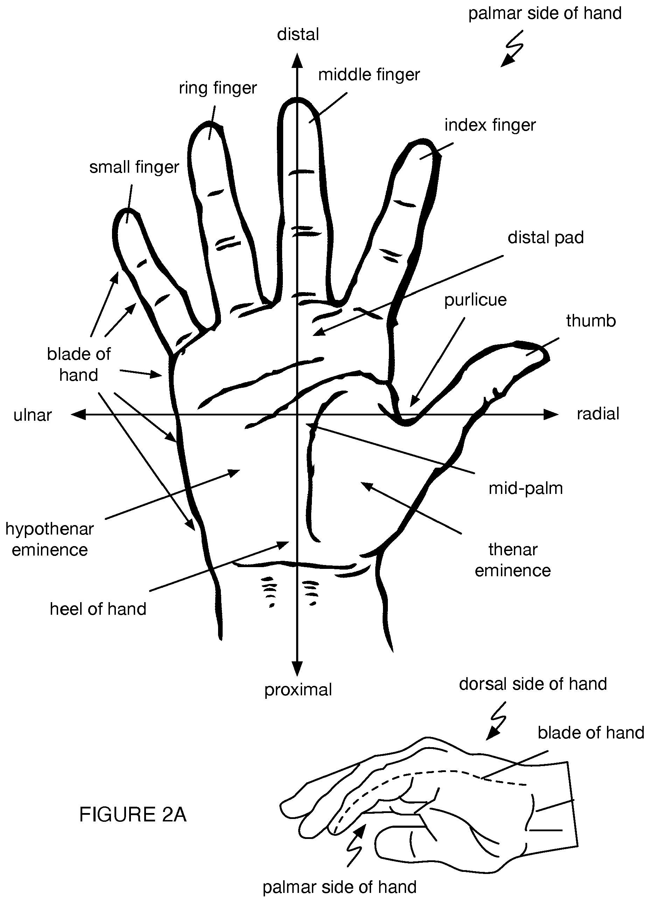

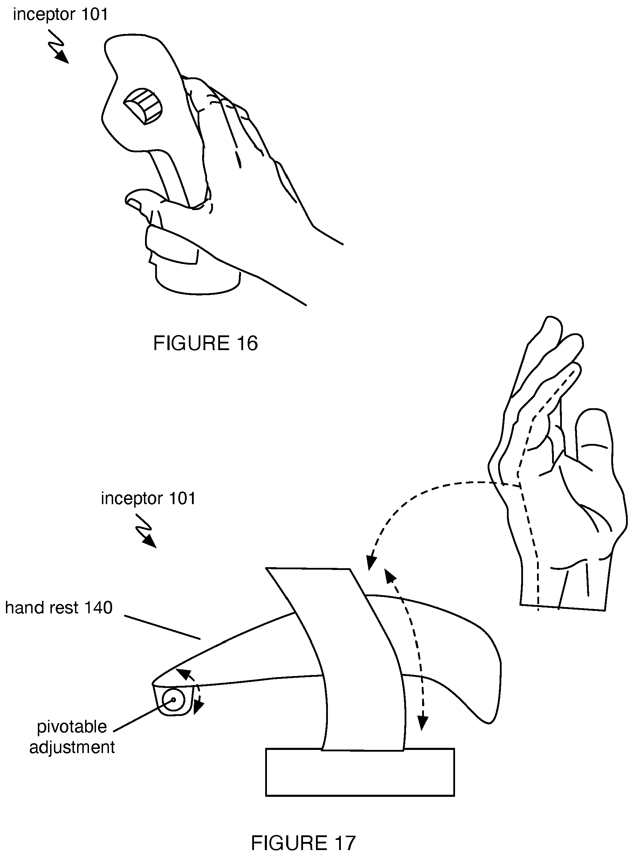

The inceptor includes a hand rest (e.g., hand blade rest, ulnar border rest, palm rest), which functions to improve the ergonomics of the inceptor. The hand rest can additionally or alternately function to allow manipulation of one or more control axes with the thumb, index finger, and/or middle finger free. The hand rest can engage and/or support the: blade of hand (an example is shown in FIGURE 2A), thenar eminence, hypothenar eminence, heel of hand, ulnar border of hand, base of the proximal phalanx (e.g., base of the small finger), small finger, wrist, ulnar border of forearm, and/or any other suitable user body part. Alternately, according to an example not covered by the claims, there can be no hand rest (an example is shown in FIGURE 16).

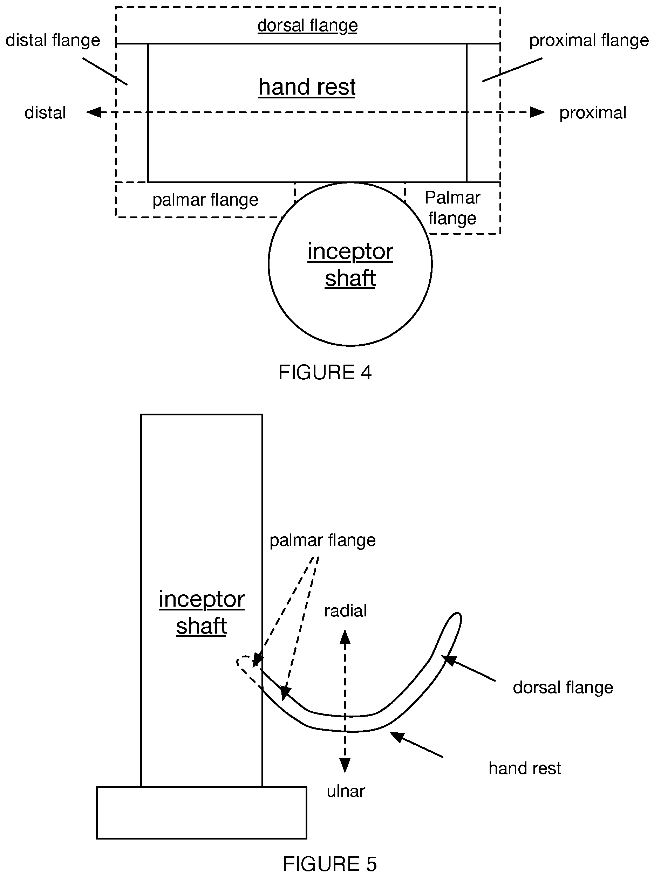

The hand rest can include any suitable flanges which function to contact and/or engage body parts to transmit forces between the user and the inceptor. The hand rest can include a dorsal flange (an example is shown in FIGURE 4), palmar flange (an example is shown in FIGURE 5), distal flange, proximal flange, and/or any other suitable flanges.

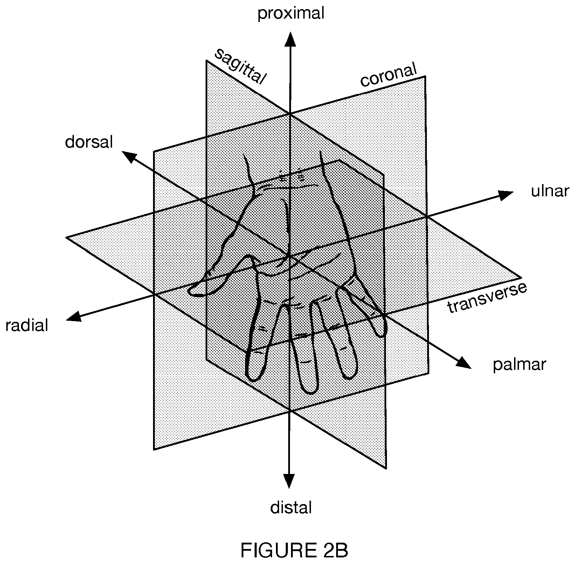

The dorsal flange can be arranged on the opposite side of the hand as the inceptor grip (e.g., distal, dorsal, peripheral, etc.; examples of hand planes are illustrated in FIGURE 2B). The dorsal flange is preferably connected to the grip of the inceptor by the palmar flange, but can alternately be supported by bracing extending from the grip or base of the inceptor. The dorsal flange preferably extends across a full thickness of the grip (i.e. the length of the dorsal flange parallel the grip's x-axis is greater than or equal to the thickness of the inceptor grip at the base) and can extend vertically (e.g., substantially parallel the grip's z-axis), however the dorsal flange can extend across a portion of the grip, be angled relative to a grip plane or axis, and/or be otherwise arranged. Preferably, the length of the dorsal flange is 5 inches (13 cm) (e.g., average palm length) or 8 inches (20 cm) (e.g., average hand length), but can be less than the average palm length, less than the average hand length, greater than the average palm length, greater than the average hand length, variable length (e.g., adjustable length), the same length as the hand rest, shorter than the hand rest, longer than the hand rest, rise part way along the grip, be configured to engage a dorsal portion of the hand (e.g., dorsal portion of small finger, dorsal portion of hypothenar eminence) and/or otherwise suitably implemented. The dorsal flange is preferably configured to be engaged by an extension of the wrist, hyperextension of one or more fingers, supination of the forearm, horizontal rotation (or external rotation) of the shoulder, and/or other suitable motion.

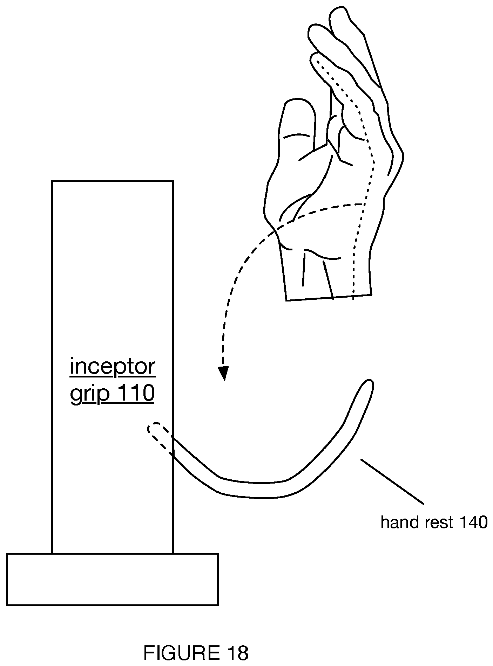

The hand rest can optionally include a palmar flange which can be mounted to the grip or base of the inceptor. The mounting can be static or movable (e.g., for adjustable hand rests), can be rigid or flexible, and/or can be otherwise suitably implemented. The palmar flange is preferably adjacent to the inceptor grip, and can be tangentially arranged relative to the thickness, extend radially from the thickness of the inceptor (e.g., in the same direction as the fingers, in the same direction as the palm), be angled relative to the inceptor grip: along a midplane, away from the palm, toward the palm, angled in the direction of wrist supination, angled in the direction of wrist pronation, parallel to the palm in the direction of the fingers, and/or otherwise suitably implemented. The palmar flange can be substantially the same length as the dorsal flange (or within 5%, 10%, 20%, etc.), however the palmar flange can have a different length than the dorsal flange, extend only toward the user from the inceptor grip (e.g., substantially parallel the grip's negative x-axis or at an angle thereto), extend only away from the user relative to the inceptor grip (e.g., substantially parallel the grip's positive x-axis or at an angle thereto), extend both towards and away from the user relative to the inceptor grip, be mounted to a palmar side of the inceptor grip, and/or be otherwise configured. Preferably, the length of the palmar flange and/or palmar engagement of the inceptor cooperatively defined by the inceptor grip and palmar flange is 5 inches (13 cm) (e.g., average palm length) or 8 inches (20 cm) (e.g., average hand length), but can be less than the average palm length, less than the average hand length, greater than the average palm length, greater than the average hand length, variable length (e.g., adjustable length, swappable length, customizable to a user), and/or have any other suitable length. The palmar flange can rise part way along the grip (an example is shown in FIGURE 18), be configured to engage a palmar portion of the hand (e.g., palmar portion of small finger, palmar portion of hypothenar eminence) and/or be otherwise suitably implemented.

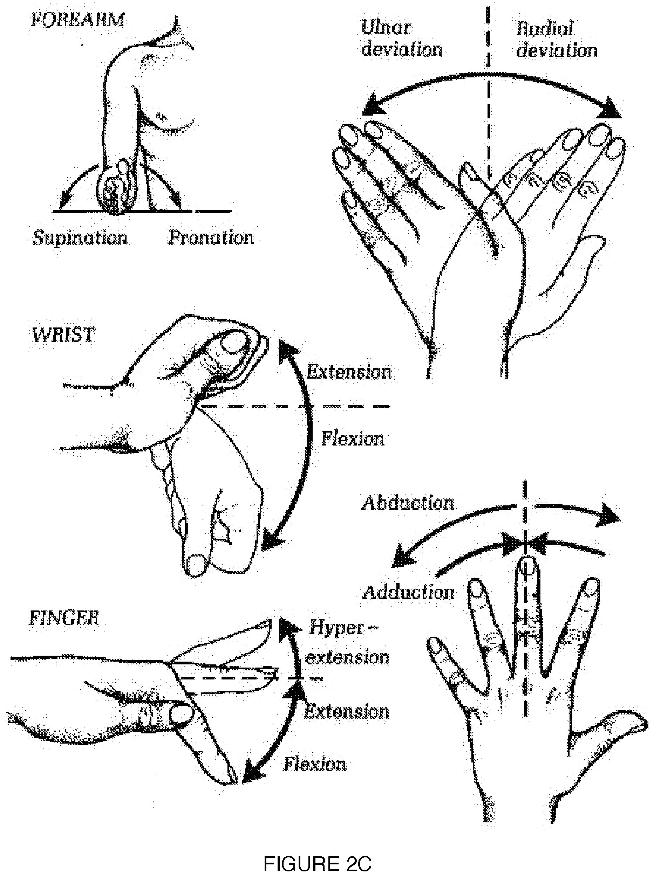

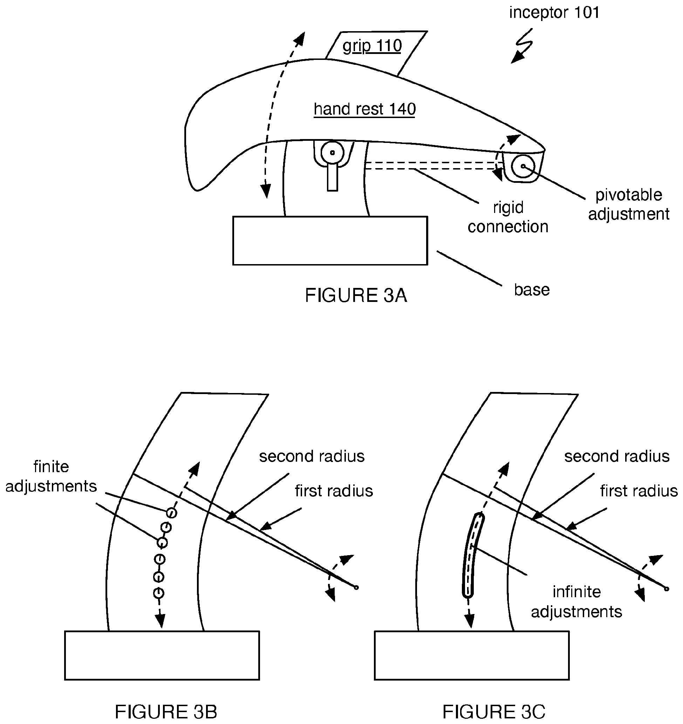

The hand rest can optionally include a distal flange and/or proximal flange, which can function to increase the contact area of the inceptor against the user's hand and/or improve the ergonomics of the inceptor. The distal flange and/or proximal flange are preferably angled downward toward the base of the inceptor, but can be flat, angle upward, and/or otherwise suitably arranged. The proximal flange can define a steeper angle than the distal flange (e.g., relative to the inceptor), the proximal and distal flanges can have the same angle, or they can be otherwise suitably implemented. Preferably the proximal flange engages the hand blade and/or wrist during a radial deviation of the wrist, but can engage the hand blade and/or wrist at all times, during other user articulations, at various customizable angles of the hand rest, during ulnar deviations of the wrist (an example is shown in FIGURE 2C), not contact the user, and/or the proximal flange can otherwise suitably contact the user. In an example, the contact area between the proximal flange and the user can increase during radial deviations of the wrist and/or the contact area between the proximal flange and the user can decrease during ulnar deviations of the wrist. The distal flange can engage the hand blade and/or small finger (e.g., ulnar border of the hand) during ulnar deviations of the wrist, but can engage the hand blade and/or small finger at all times, during other user articulations, at various customizable angles of the hand rest, during radial deviations of the wrist, not contact the user, and/or the distal flange can otherwise suitably contact the user. The distal flange can additionally or alternately mount the hand rest to the inceptor (e.g., inceptor grip) and/or serve as a pivot point for the hand rest (e.g., in variants with an adjustable hand rest, examples are shown in FIGURES 3A-C).

However, the hand rest can include any other suitable set of flanges and/or otherwise suitably engage the hand.

In variants, the hand rest can be adjustable and/or configurable, which can improve ergonomics and/or user control authority. The hand rest can additionally allow for positive grip and access to secondary inceptor inputs (e.g., buttons and switches) across anthropomorphic ranges. In particular, this is important because hand dimensions vary largely across user populations. In a specific example, hand breadth can vary from 6.9 cm in a 5^{th} percentile female to 8.3cm in a 95^{th} percentile male. As a result, the position the thumb and/or fingers (e.g., proximal to the top of the inceptor grip, within the thumb and/or finger grooves, etc.) and/or inceptor ergonomics can be improved with an adjustable or reconfigurable hand rest. The hand rest can include adjustability along longitudinal, lateral, and/or vertical inceptor directions - which can be the same or different from the X, Y, and/or Z axes of the inceptor. Adjustment mechanisms on the inceptor can adjust the dimensions and/or relative position (to the inceptor grip) of the hand rest (an example is shown in FIGURE 17). Adjustment mechanisms can increase a neutral pitch, yaw, and/or roll angle of the hand rest relative to the inceptor grip or relative to the base of the inceptor, increase a curvature of the hand rest, decrease a concavity of the hand rest, change a camber of the hand rest, change a groove width (e.g., between the palmar and dorsal flanges) of the hand rest, change a length of the hand rest, slide the hand rest in a palmar direction (e.g., closer to the grip) or in a dorsal direction (e.g., away from the grip), tilt the hand rest toward/away from the grip, pivot the hand rest about an axis (e.g., fixed relative to the inceptor grip). Adjustment mechanisms are preferably configured by manual adjustment, but can alternately be automatic, electrically actuated (e.g., acting as a portion of the feedback mechanism), statically stable in multiple positions, and/or otherwise configurable. In a first variant, the hand rest is pivotally mounted to the inceptor (e.g., inceptor grip) about a pivot axis. In a first example of the first variant, the pivot axis is located at the center point of inceptor curvature (e.g., exactly center point, within 10% curvature radius, within 20% curvature radius, within 50% curvature radius). An example is shown in FIGURES 3A-C. In a second variant the palmar flange and/or bottom of the hand rest is slidable relative to the inceptor grip.

Adjustment mechanisms for the hand rest can include a locking mechanism which functions to retain a static position of the hand rest at a point customized to the user (e.g., selected by user). Locking mechanisms can include: pin in hole, ratcheting, threading, friction-based, or other suitable locking mechanisms. Locking mechanisms can have finite (e.g., where a user can select and set a predetermined/preferred position) or infinite adjustability (e.g., for maximum variability/customizability). Locking mechanisms can be manually operated and/or automatic (e.g., motorized, automatic adjustment with non-back drivable gearing, etc.). However, locking mechanisms can be otherwise suitably implemented.

Preferably, the locking mechanisms, sliding, and/or pivoting adjustment mechanisms are arranged below the hand rest, which can avoid infringing on the range of motion of the hand, avoid irritation and discomfort for the user, and reduce the likelihood of accidental disturbance (e.g., unlocking) during operation of the inceptor. However, the inceptor can include any other suitable adjustment mechanisms arranged in any suitable manner.

Preferably, the hand rest is rigidly coupled to the grip and/or otherwise transfers forces/displacements to the primary axes of the inceptor (e.g., X, Y, Z), however the hand rest can alternately use semi-flexible couplings, include a control axis between the palm rest and grip, and/or include any other suitable mounting relative to the grip.

The dorsal and palmar flanges are concave across a midplane (e.g., including vertical/lateral directions), forming a groove in which the blade of the hand can nest. More specifically, the hand rest is convex in the lengthwise direction (e.g., with the distal and/or proximal flanges sloping downwards). The hand rest is saddle-shaped (e.g., concave down along length and concave up along width).

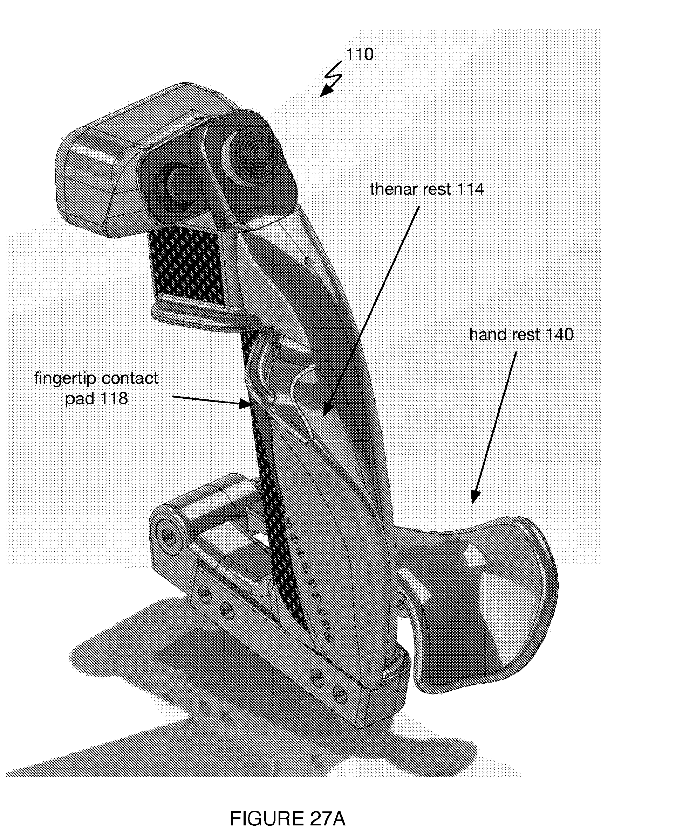

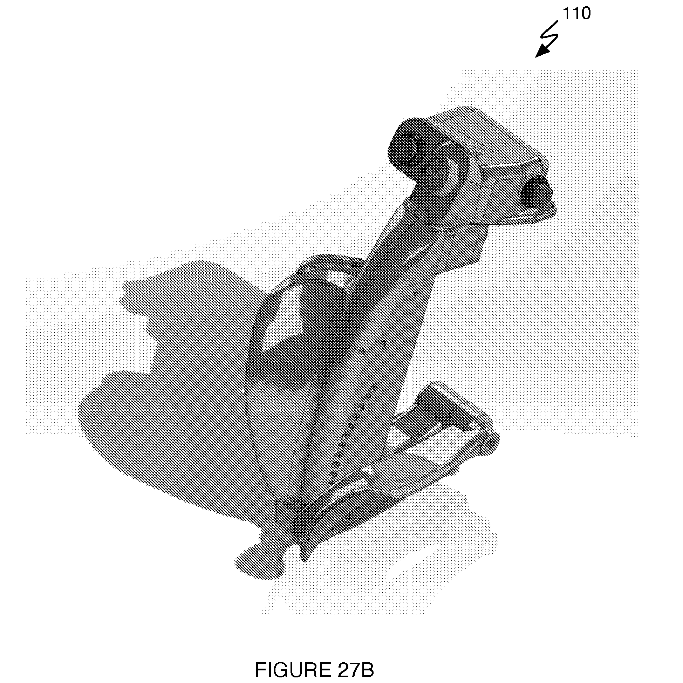

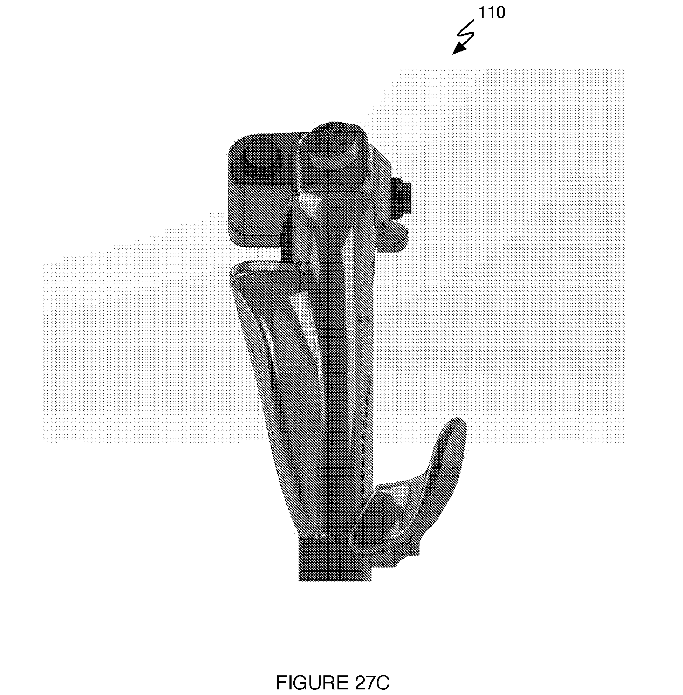

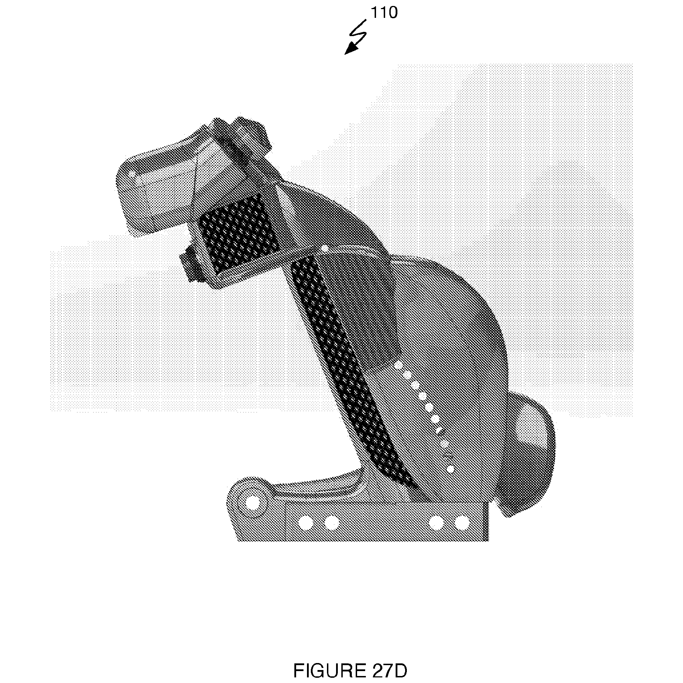

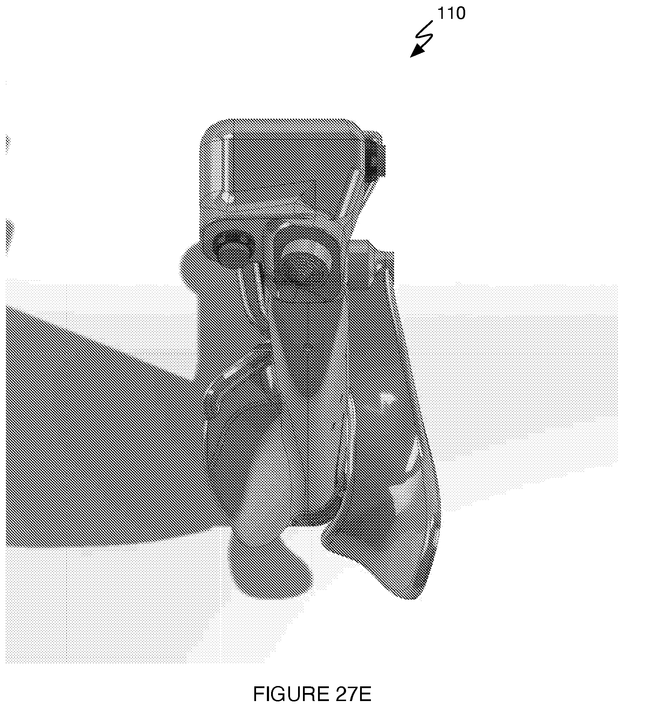

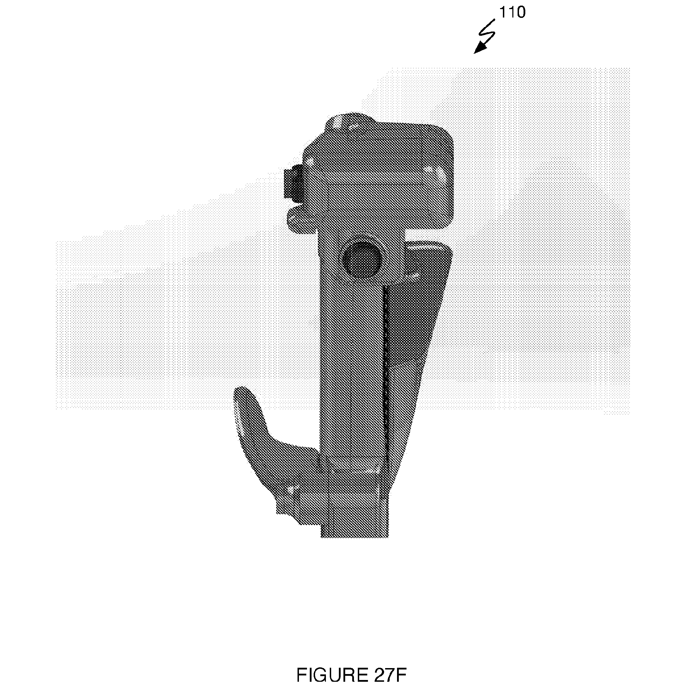

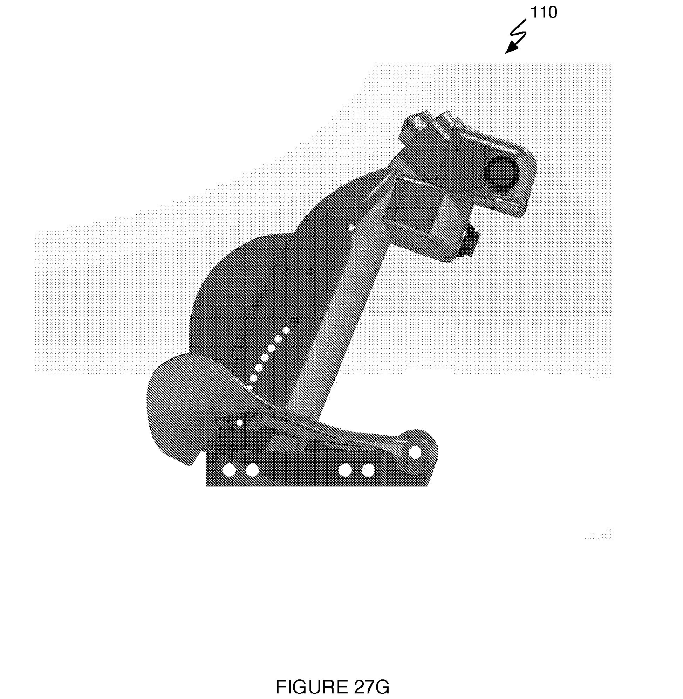

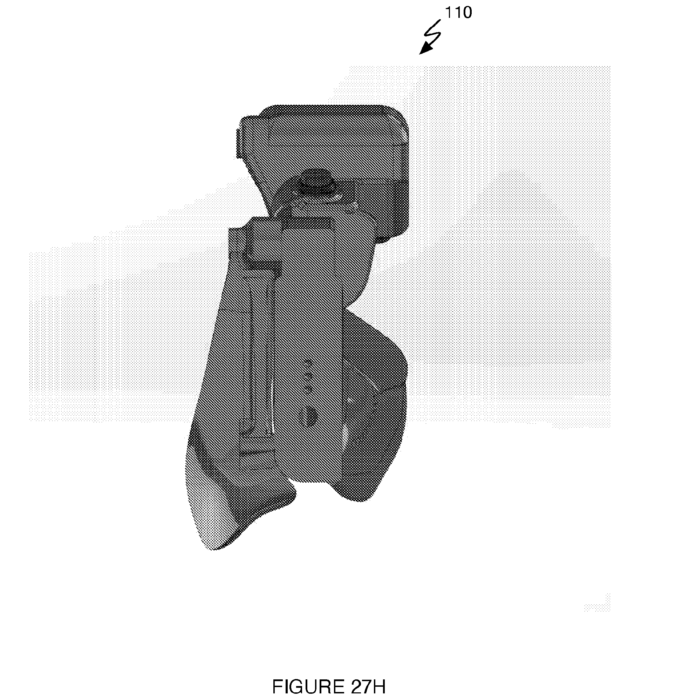

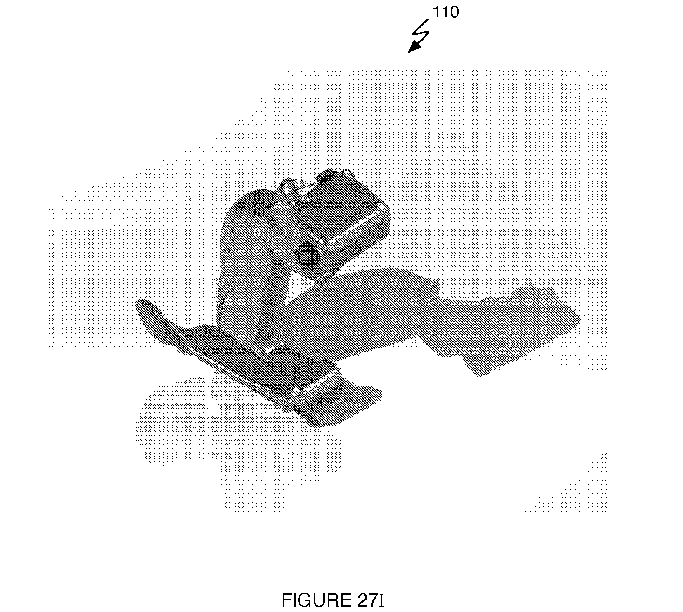

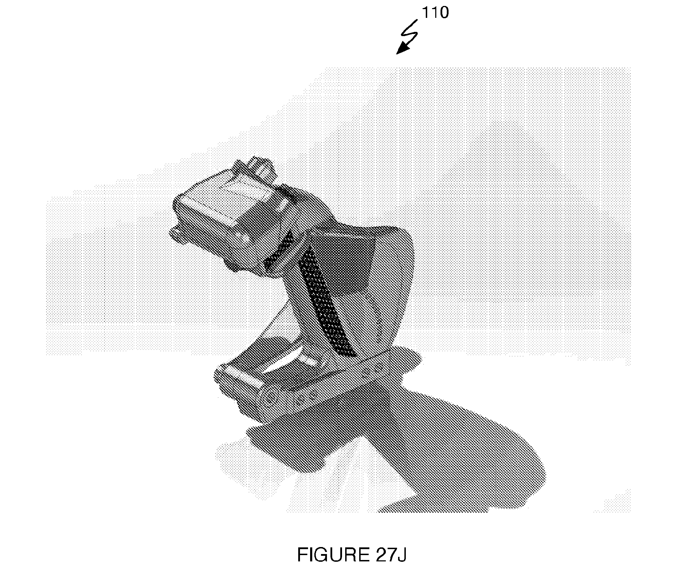

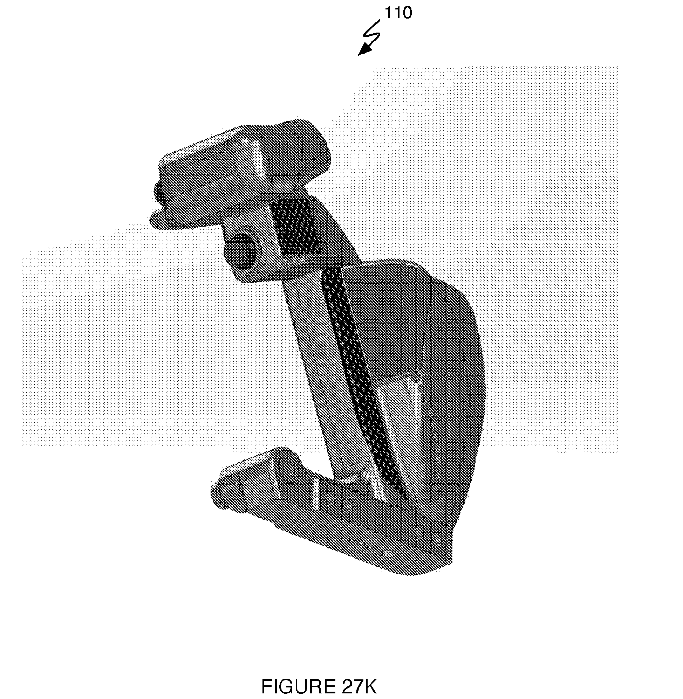

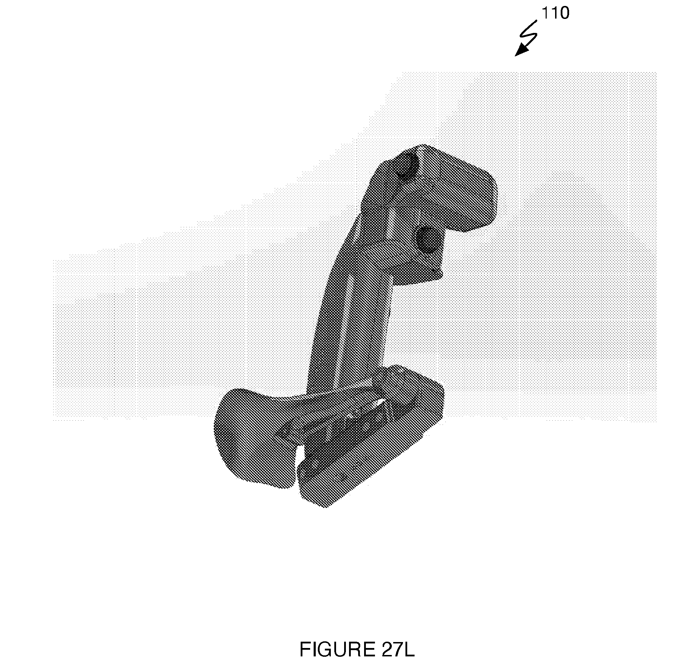

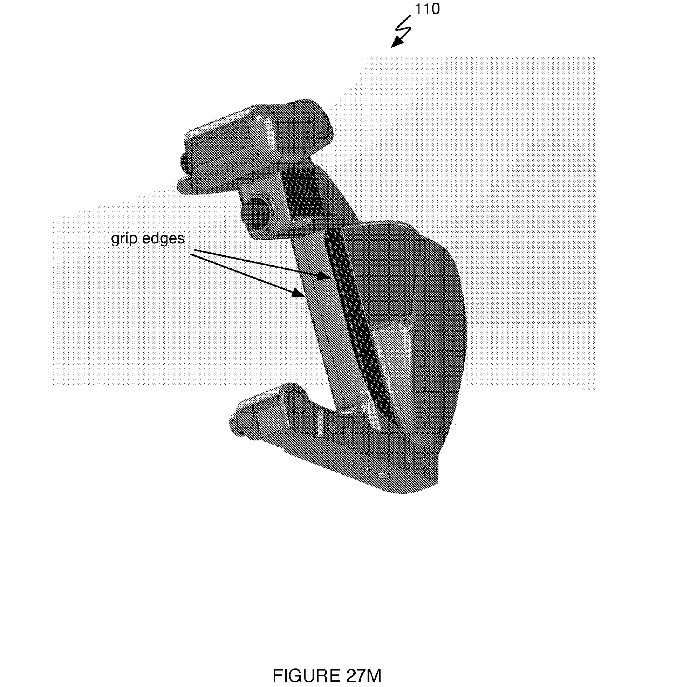

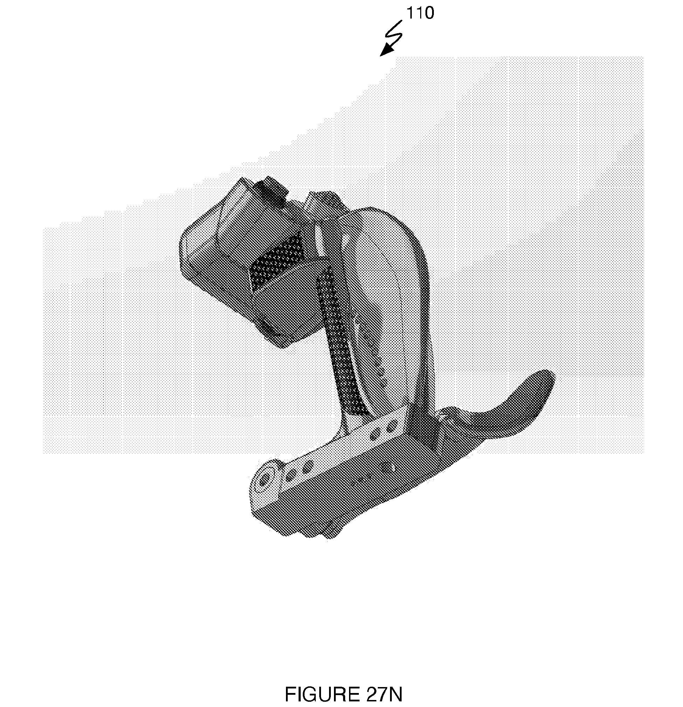

The inceptor preferably includes an inceptor grip (a.k.a. "shaft" or "grip shaft") which functions to engage the purlicue, palmar side of the hand (e.g., thenar, hypothenar, phalanx base), and/or fingers to improve inceptor ergonomics (an example inceptor grip is shown in FIGURES 27A-N). The grip can additionally or alternately function to structurally support one or more binary inputs and/or input axes. The inceptor can optionally function to provide haptic reference for the user to enable non-visual operation of one or more binary inputs and/or input axes. The spine of the grip can be straight, curved, arcuate, and/or have any other suitable geometry. In a first variant, the grip is curved with constant radius. In a second variant, the grip is curved with variable radius. In a third variant, the grip is curved about the palm blade rest pivot point. The grip can define any suitable angle relative to the base and/or mounting surface (e.g., in a neutral position), which can be towards the user (or seat of the user), away from the user, and/or any other suitable angle.

The grip can include any suitable set of grip edges along a length of the spine, which functions to engage (e.g., slightly 'dig into') the pads of a user's fingers. As an example, the grip edges can increase the rotational force that a user can apply when compared to a smooth/sloped surface. Additionally, grip edges can function to increase the flexibility of a grip to accommodate different hand sizes, since a hand can naturally deviate from the surface of the grip between pairs of edges without influencing the maximum torque the user can apply. Grip edges can be formed by relief of a flat face on the grip which deviates from a smooth surface of the grip. Alternatively, grip edges can be formed by a flat, arcuate, or arched surface running a partial length of the spine of the grip (e.g., substantially parallel to the twist/Z-axis of the grip). The surface between the pairs of grip edges can be a minimal surface, a monoclastic surface (e.g., arching with the spine), a synclastic surface (e.g., convex, etc.), a flat surface, a semi-cylinder, and/or any other suitable surface. Grip edges can be arranged on a rear (distal) side of the grip opposing a user and/or can extend crossways within/across finger grooves. Grip edges can have a fillet radius, such as less than a threshold fillet radius of: 3mm, 2mm, 1mm, .5mm, .25mm, and/or any other suitable fillet radius. Alternatively, grip edges can be chamfered, blunted, or otherwise formed.

The grip can be manufactured from any suitable material(s), which can include: plastic, metal, composite, and/or any other suitable material. The grip can be manufactured by any suitable process, and can be: injection molded, rotational (roto) molded, extrusion blow molded, injection blow molded, reaction injection molded, vacuum cast, thermoformed, compression molded, cast (die cast, sand cast, investment cast, pressure cast, etc.) die forged, formed, rolled, layup, and/or any other suitable manufacturing technique. The grip can include an exterior grip material of the same material or different material from the body of the grip, which can include: rubber padding, external texture padding, knurling (e.g., metal, plastic, rubber, etc.), and/or any other suitable grip.

The grip can optionally include a thumb groove 112, which functions to enable haptic and/or non-visual positioning of the thumb relative to one or more inputs of the inceptor. The thumb groove is preferably on the side of the inceptor grip opposing the hand rest, but can additionally or alternately be arranged on the top of the inceptor grip, rear of the inceptor grip, left side, right side, and/or otherwise arranged. The thumb groove can be located at any suitable height along the inceptor grip - preferably the thumb groove at least 8.3 cm (95^{th} percentile male hand breadth) above the base of the grip and/or minimal point of the hand rest (e.g., in the lowest configuration), but can be 5 cm, 7 cm, 8 cm, 9 cm, 10 cm, 11 cm, 15 cm, any range bounded by the aforementioned values, and/or any other suitable height along the inceptor grip. Preferably, the thumb groove is substantially oriented towards (e.g., terminating at, containing and enclosing, etc.) the A-input axis (e.g., thumb axis), thumb wheel, and/or a roller wheel, but can be oriented towards any suitable axis, towards the top of the inceptor, and/or any other suitable binary input or input axis. Alternatively, the thumb groove can be oriented towards no inputs, (e.g., such as for ergonomics and improved control authority). The thumb groove is preferably tapered towards the front and/or base of the grip, but can be straight cut, notched, formed from a flange or protrusion in the inceptor grip, mounted to the inceptor grip, relieved from the inceptor grip, and/or otherwise implemented.

The grip can include a thenar rest 114 (e.g., "thenar brace") which functions to engage a thenar eminence (e.g., thenar portion) of the hand of the user. The thenar rest can additionally or alternatively function to improve a user's grip during twist (e.g., wrist flexion, outboard twist, clockwise twist for a right-handed inceptor). The thenar rest is preferably integrated into the body of the grip and/or formed with the grip, but can additionally or alternatively be a separate component mounted to the grip or can be integrated into the hand rest (e.g., can be adjustable with the hand rest). In variants, the thenar rest can form all or a portion of the thumb groove, but can be otherwise suitable integrated into the grip. The thenar rest can include a groove which extends beyond the hand rest in one or more configurations (e.g., when the hand rest is raised, shortening an effective length of the inceptor, such as for a smaller hand). The thenar rest can include a groove having the same dimensions and/or characteristics as the thumb groove, or a different geometry. The width of the groove can be .5 cm, 1 cm, 2 cm, 3 cm, 4 cm, any range bounded by the aforementioned values, and/or any other suitable width. The groove can be straight, curved (e.g., concave monoclastic, concave anticlastic, saddle-shaped, etc.), trace a partial helix or 3D spiral (e.g., sweep a rotation and a translation about the Z-axis and/or a central axis of the spine), tapered (e.g., narrowing towards a base of the inceptor) and or be otherwise formed. The groove can have a relative width (e.g., for a particular cross section taken relative to a base plane of the inceptor, such as cooperatively defined by the x/y axes), which can be: less than an width of the inceptor (e.g., taken perpendicular to a the width of the groove), half the width of the inceptor, one quarter of the width of the inceptor, and/or any other suitable relative dimension. The groove is preferably formed by a protrusion along a proximal portion of the grip (e.g., extended surface, fin, etc.; oriented towards a user, extending substantially parallel to the heel of the hand), but can additionally or alternatively include a relieved section of a convex profile of the remainder of the grip. The thenar rest can span 3 cm, 5 cm, 8 cm, 10 cm, 12 cm, greater than 12 cm, and/or any other suitable length along the inceptor grip. However, the inceptor grip can include (or be used with) any other suitable thenar rest and/or otherwise exclude a thenar rest.

In one variant, the thenar rest can include a syncline-shaped groove wherein, for a cross section of the grip parallel to a base plane (e.g., X/Y plane) of the grip, a width of the syncline-shaped groove is greater than 30% of a characteristic dimension of the grip. In an example, the width of the syncline-shaped groove defines a first vector in plane with the cross section, wherein the width of the syncline-shaped groove is substantially equal to (e.g., exactly equal, within 5%, within 10%, within 20%, etc.) a thickness of the grip in a direction perpendicular to the first vector (in the cross sectional plane).

The grip can optionally include a set of finger grooves 116, which function to enable haptic and/or non-visual positioning of the index and/or middle finger relative to one or more inputs of the inceptor. The finger grooves are preferably on the same side of the inceptor grip as the hand rest, but can alternately be arranged on the rear of the grip, top of the grip, underside of the grip, and/or in any other suitable location. The finger grooves are preferably oriented substantially towards (e.g., terminating at, containing and enclosing, etc.) one or more control axes or binary inputs, but can alternately be oriented towards no inputs. The grip can include 0, 1, 2, 3, or more than 3 finger grooves, which can be designated to engage the user's index finger, middle finger, ring finger, a non-dominant thumb, a finger on a non-dominant hand, and/or any other suitable body part. In a specific example, the grip includes a first finger groove and a second finger groove, formed in a stair-step pattern on the rear of the inceptor grip.

The grip can include a fingertip contact pad 118 (e.g., "finger wall") which functions to engage the fingertips of the hand and/or functions to reduce the twist effort required to generate the same effective moment (e.g., during wrist flexion). The fingertip contact pad can be planar (e.g., substantially flat), but can be convex, concave, and/or have any other suitable shape. The fingertip contact pad can be arranged: at a terminal end of the finger groove, within the finger groove, on a back side of the thenar rest (e.g., opposing the surface engaging the thenar eminence), offset from a face of extending between a pair of grip edges (e.g., substantially parallel to the face, etc.), and/or otherwise suitably arranged. In variants, a surface normal of the fingertip contact pad substantially opposes a surface normal of the thenar rest (e.g., defining a skew angle within 45 degrees of direct opposition, direct opposition. In variants, the surface normal of the fingertip contact pad is parallel with a tangent plane of the spine of grip (e.g., about the Z-axis), but can be otherwise arranged. The fingertip contact pad is preferably textured or knurled, but can be otherwise constructed with a material having a high frictional coefficient when engaged with a human fingertip (e.g., frictional coefficient of 130% that of the surface of the inceptor spine, greater than the frictional coefficient of the remainder of the spine, etc.). The contact pad can be configured to engage an individual finger (e.g., digit associated with a finger groove) or a plurality of fingers (e.g., third, fourth, and fifth digits of the hand; 2 finger, 3 fingers, 4 fingers, etc.). The height of the contact pad (e.g., evaluated along the length of the Z-axis) can be less than 1 cm, 1 cm, 2 cm, 3 cm, 5 cm, 7 cm, greater than 7 cm, any range bounded by the aforementioned values, and/or any other suitable height. In variants, the base of the contact pad can be arranged below the nadir of the hand rest (e.g., in a raised position of the hand rest), can be substantially aligned with a = base/lower end of the thenar rest, and/or can be otherwise arranged. The width of the contact pad (e.g., evaluated radially, for a particular cross section) can be: less than .5 cm, 1 cm, 1.5 cm, 2 cm, 3 cm, any range bounded by the aforementioned values, and/or any other suitable width. The contact pad can be: integrated into a unitary body of the inceptor grip, integrated into the hand rest, integrated into the thenar rest (e.g., backside of the protruding fin along the spine of the inceptor), mounted to the grip (e.g., of separate material manufacture or mounting; protruding fin/flange separate from and adjacent to the thenar rest), and/or otherwise formed. However, the inceptor grip can include any other suitable fingertip contact pad.

However, the grip can include any other suitable grooves in any suitable arrangement and/or haptic reference geometry.

The inceptor grip and/or inceptor can support any suitable secondary input axes, which can include: triggers, roller wheels (e.g., thumb wheels), rollers, joysticks, levers, knobs, sliders, and/or any other input axes, which can be controllable by the thumb, index, and/or middle fingers. The inceptor can additionally include any suitable binary inputs such as buttons, switches, D-pads, binary triggers, binary levers, and/or any other suitable binary inputs.

In a first variant, the inceptor includes an A-input (e.g., thumb axis) arranged on the opposite side of the grip as the hand rest and disposed at the end of a thumb groove.

In a second variant, the inceptor includes a stick trim 4-way switch, height rate command button, flight control system (FCS) paddle switch, mode disengage trigger, accelerate to wing-borne flight button (airspeed target button), decelerate to hover button, and an A-axis. In a first example, the A-axis is a thumb wheel. In a second example, the FCS paddle switch is adjacent to the palmar side of the palm blade rest, and is configured to be actuated by a flexion of the small finger (e.g., with palm blade relaxed/neutral on the hand rest). In a third example, the airspeed target button is arranged on top of the inceptor grip and is controllable by the thumb (e.g., with thumb not within thumb groove and no requirement for simultaneous use of A-input and airspeed target button). In a fourth example, the decelerate to hover button is arranged on top of the inceptor grip and is controllable by the thumb (e.g., with thumb not within thumb groove and no requirement for simultaneous use of A-input and decelerate to hover button). In a fifth example, the stick trim 4-way switch is arranged on top of the inceptor grip and is controllable by the thumb (e.g., with thumb not within thumb groove and no requirement for simultaneous use of A-input and decelerate to hover button). In a sixth example, the height rate command button is arranged at the end of the first finger groove, enabling simultaneous manipulation with primary axes and/or A-axis. In a seventh example, the mode disengage trigger is arranged at the end of the second finger groove, enabling simultaneous manipulation with primary axes and/or A-axis. In an eighth example, the A-axis (e.g., thumbwheel) does not self-center (automatically center), allowing the thumb to be removed without modifying the control input. In a ninth example, a lower portion (e.g., bottom) of the A-axis (such as a thumb wheel) can be exposed to and/or controlled by the middle or index finger, allowing the A-axis to be held in a specific position with the thumb free for other inputs. In a tenth example, a 'brake' on the A-axis can be actuated with other fingers (e.g., on same hand, different hand), retaining the position and associated input of the A-axis with the thumb free for other inputs. In an eleventh example, an index finger input component (e.g., button, trigger) can be aligned with the pitch yaw plane of the inceptor, such as defining a surface normal vector lying in a plane cooperatively defined by the inceptor pitch axis and the twist axis and/or defining a surface normal vector which substantially intersects the Z-axis.

In a third variant, the A-axis can be arranged on a side-stick inceptor (e.g., such as a left-handed inceptor, opposing-handed sidestick). The side-stick can be a single-axis inceptor (e.g., 'throttle' style) or a multi-axis inceptor. The side-stick is preferably self-centering (e.g., with a deadband and/or soft stops as in the other primary axes), but can alternatively not self-center and retain displacement positions, or can be otherwise suitably configured. The side-stick inceptor is preferably passive, but can alternatively be active and/or otherwise formed. In a specific example, the A-axis can be arranged on a second inceptor which can be the same (e.g., duplicative - such as for a second user) or different from the inceptor (e.g., mirrored grip, different grip, etc.).

The user can engage and/or manipulate any suitable portions of the inceptor and/or hand rest by any suitable motions and/or articulations. The user can engage the grip of the inceptor at: the left side, right side, front, rear, hand rest side, thumb rest side (or side opposite the hand rest), and/or any other suitable portion of the inceptor grip. The user can engage the hand rest at the proximal end (toward user), distal end (away from user), palmar flange (adjacent to grip), dorsal flange (peripheral side, opposing grip, etc.), thumb groove (side adjacent to grip, peripheral side, etc.). The user can engage the inceptor and/or other components of the system with any suitable portions of the hand, wrist, forearm, and/or other suitable body parts. The portions of the user's hand which control one or more axes can be: the dorsal side of the hand, the palmar side of the hand, the small finger (base, proximal portion, distal portion, palmar side, dorsal side, etc.), the blade of the hand (e.g., palmar side, dorsal side, ulnar border of hand, etc.), hypothenar section of hand, thenar section of hand, mid palm section of the hand, the heel of the hand, the fingers of the hand, the thumb, the purlicue, the upper pad of the hand, outer pad of the hand, and/or any other suitable portion of the hand. The user can manipulate the inceptor and other suitable components with any suitable motions of the wrist (such as: extension, flexion, ulnar deviation, radial deviation, and/or neutral position/motion), fingers (such as: extension, flexion, and/or neutral position/motion), forearm/elbow (such as supination, pronation, flexion, extension, and/or neutral position/motion), thumb (such as: palmar abduction, radial abduction, anteposition, retroposition, flexion, extension, and/or neutral position/motion), shoulder (such as: horizontal flexion or internal rotation, horizontal extension or external rotation, vertical flexion, vertical extension, abduction, adduction, and/or neutral position/motion), and/or any other suitable motions of any suitable user body part. It is noted that the human arm has excess degrees of freedom, and therefore some motions can be achieved by multiple combinations and/or permutations of articulations - it is assumed that any alternate combinations and/or permutations which substantially achieve the same engagement, inceptor behavior (e.g., in a particular axis), and/or command output can additionally or alternately be substituted for the articulations disclosed herein.

The primary axes, including the X-axis, Y-axis, and Z-axis, of the inceptor can be manipulated by any suitable set of user motions and/or corresponding inceptor contacts points.

Preferably, application of force on the distal flange (or distal portion of the hand rest) and/or pushing forwards (away from pilot) on the grip of the inceptor (e.g., thenar rest) can generate a net moment in a first direction (e.g., positive or negative) of the X-axis. Preferably, application of force on the proximal portion of the palm blade and/or pulling backwards (towards pilot) on the grip of the inceptor can generate a net moment in a second direction (opposing the first direction) of the X-axis.

Application of force on the dorsal flange (e.g., in an outward direction relative to the inceptor grip, right) can generate a net moment in a first direction (e.g., positive or negative) of the Y-axis. Additionally or alternately, a rightward (e.g., for a right handed inceptor) force on the inceptor grip by the thumb can generate a net moment in the first direction of the Y-axis. Application of force on the palmar flange (e.g., in an inward direction relative to the grip, left) can generate a net moment in a second direction (e.g., opposing the first direction) of the Y-axis. Additionally or alternately, a leftward force on the inceptor grip by the palm (e.g., palmar side, mid palm, etc.) can generate a net moment in the second direction.

Application of force on the proximal portion of the palmar flange and distal portion of the dorsal flange can cooperatively generate a net moment in a first direction (e.g., positive, negative) of the Z-axis. Additionally or alternately, application of force on the proximal portion of the inceptor grip (e.g., side engaging purlicue, near side; thenar rest) and distal portion of the dorsal flange can cooperatively generate a net moment in a first direction of the Z-axis. Application of force on the distal portion of the palmar flange and proximal portion of the dorsal flange can cooperatively generate a net moment in a second direction (e.g., opposing the first direction) of the Z-axis. Additionally or alternately, application of force on the distal portion of the inceptor grip (e.g., rear side; fingertip contact pad) and proximal portion of the dorsal flange can cooperatively generate a net moment in a second direction of the Z-axis.

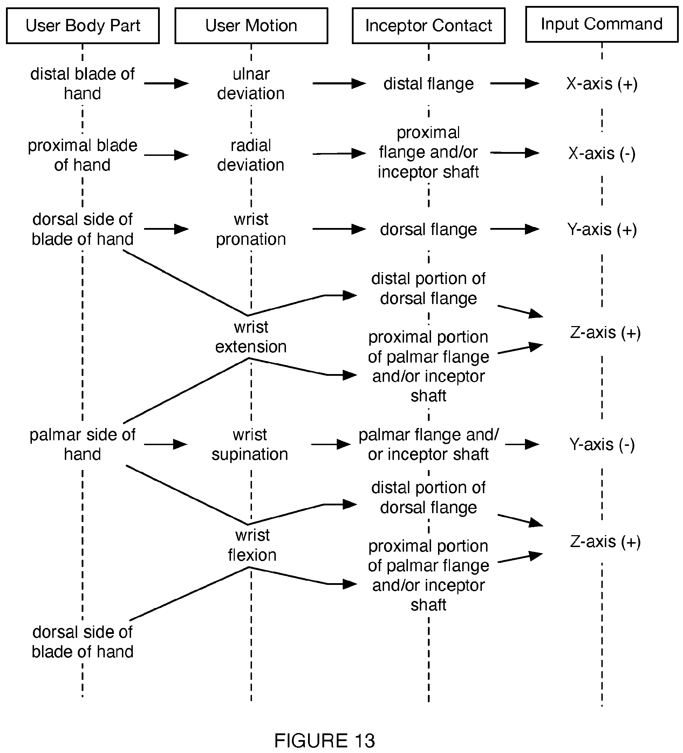

An example of inceptor contact mappings to input commands is illustrated in FIGURE 13.

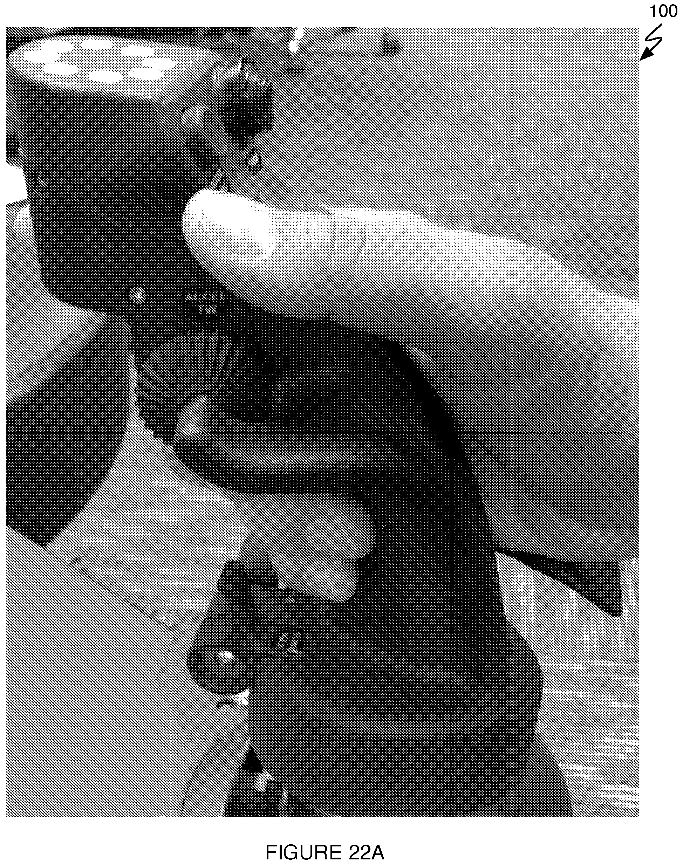

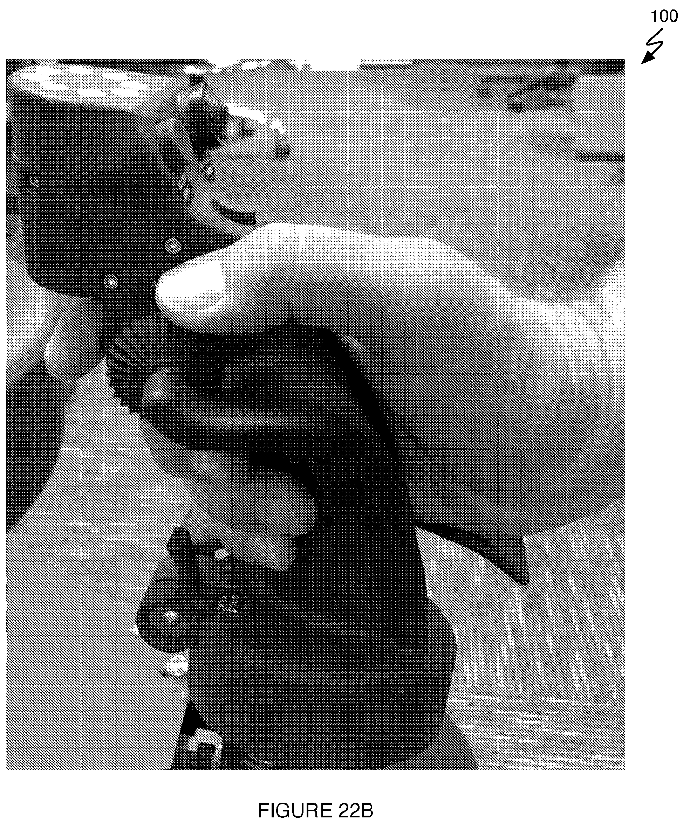

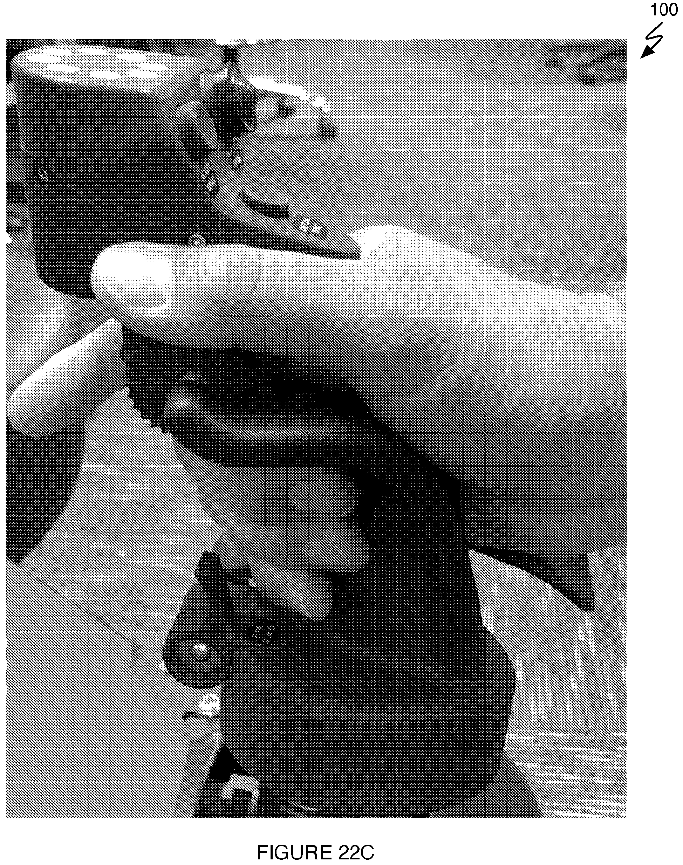

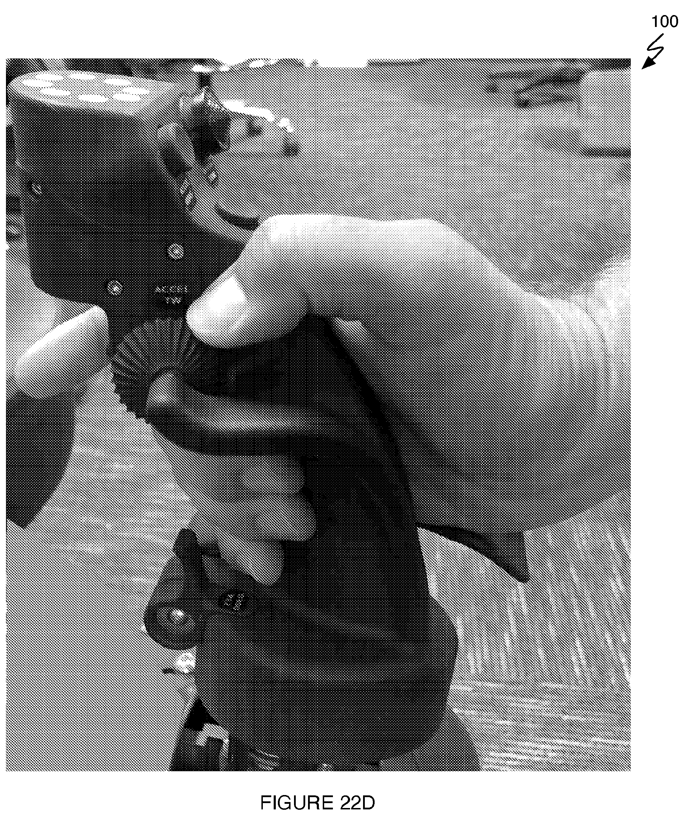

In a first variant, the X-axis, Y-axis, and/or Z-axis can be manipulated without the use of the thumb (an example is shown in FIGURE 22A), without the activation of thenar eminence, with the thumb in a relaxed or neutral position, and/or with the fingers in a relaxed, neutral, extended, retracted or other configuration. In a first specific example, the X-axis can be manipulated without requiring the involvement of the thumb, index finger, and/or middle finger, leaving them free for executing other controls, positioning them to execute other controls, and/or allowing them to concurrently execute other controls. In a second specific example, the Y-axis can be manipulated without requiring the involvement of the thumb, index finger, and/or middle finger, leaving them free for executing other controls, positioning them to execute other controls, and/or allowing them to concurrently execute other controls. In a third specific example, the Z-axis can be manipulated without requiring the involvement of the thumb, index finger, and/or middle finger, leaving them free for executing other controls, positioning them to execute other controls, and/or allowing them to concurrently execute other controls. In a fourth specific example: the X, Y, and Z axes can be controlled with the thumb located in the thumb groove (e.g., in a neutral position), index finger in the first finger groove (e.g., in a neutral position), and/or middle finger in the second finger groove (e.g., in a neutral position).

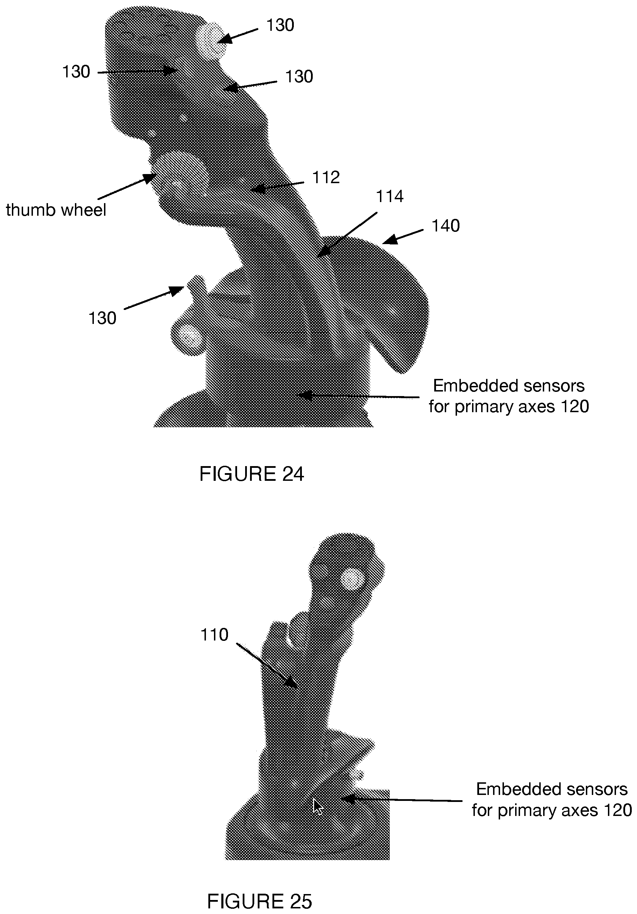

In a second variant, the X-axis, Y-axis, and/or Z-axis can be manipulated with only the small finger and/or palm of the pilot's hand - which is preferably the pilot's right hand (an example of a right hand inceptor is shown in FIGURE 25), but can alternately be the pilot's left hand, either hand, and/or both hands.

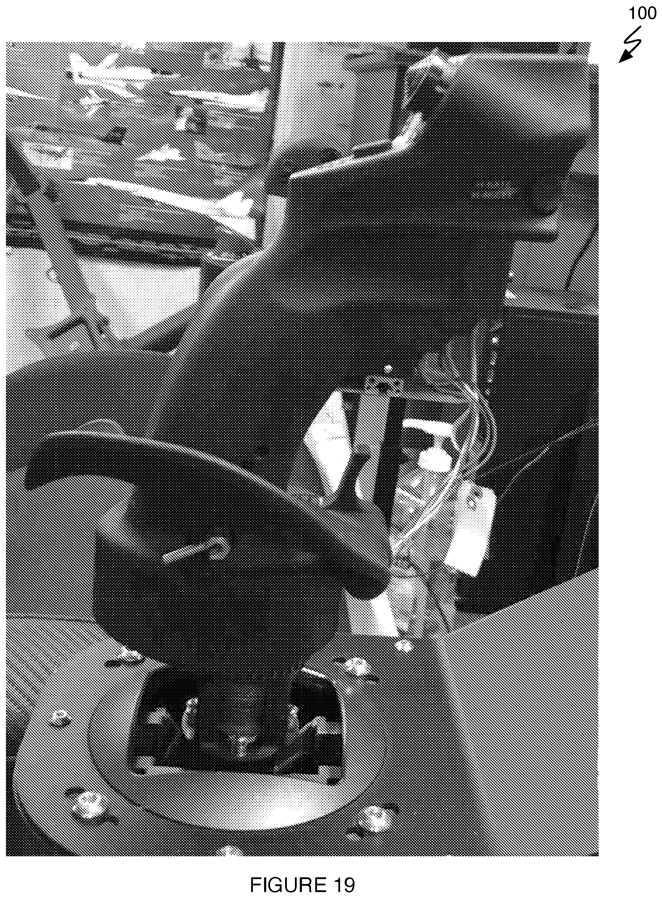

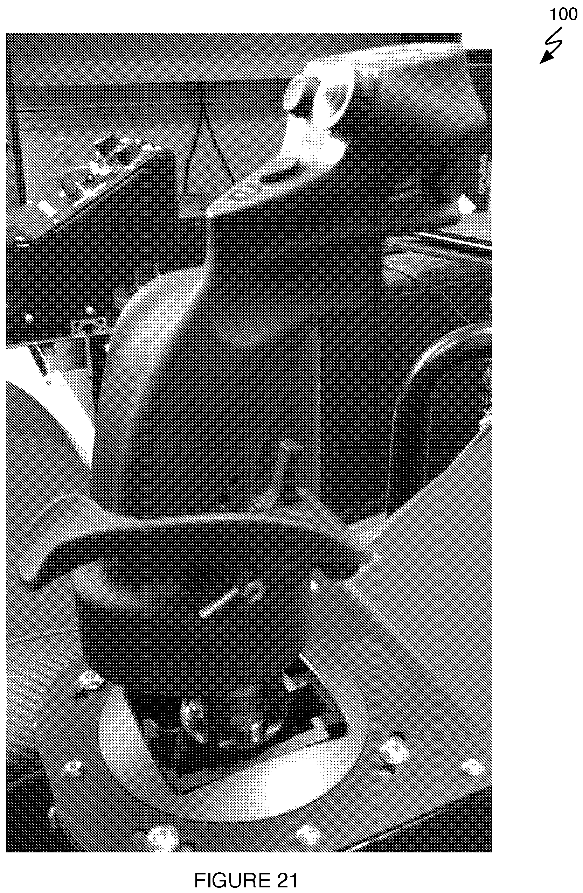

First, second, and third specific examples of an inceptor are shown in FIGURES 19, 21 and 24, respectively.

In variants, the system can include two inceptors (e.g., wherein helicopter-analogous actions are associated with a right-hand inceptor, wherein airplane-analogous actions are associated with a left-hand inceptor, vice versa, etc.). In another example, the system can include two inceptors, wherein a first inceptor is operable in a first flight regime (e.g., hover) and the second inceptor is operable in a second flight regime (e.g., airplane), and both inceptors are operable (e.g., in a redundant manner, in a non-redundant manner, etc.) in a transition flight regime. In additional or alternative variations, the unified command system can have a single inceptor. However, the input mechanism can additionally or alternatively include any suitable number of inceptors.

Inceptor(s) can be left-handed (e.g., designed to engage left hand of user, positioned on the left of the user, include the hand rest on the left side of the grip, etc.), right-handed, two-handed, symmetric (e.g., operated with either hand), and/or otherwise configured. In a specific example, the system can include a primary inceptor (e.g., with a right-handed grip; including a twist and/or Z-axis; having at least 3 primary axes) and a side-stick inceptor (e.g., with a left-handed grip; including the A-axis).

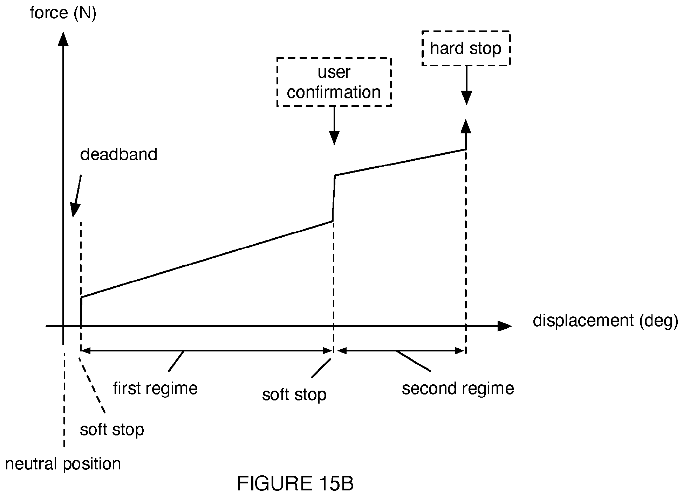

One or more axes/inputs of the inceptor can include a deadband (or dead zone), which functions for avoid processing small departures from the neutral position (e.g., related to mechanical or sensor bias, incidental disturbances, etc.; an example is shown in FIGURE 15B). Deadbands can be symmetric or asymmetric ranges about the neutral position. Deadbands can be predetermined, dynamically determined, configured by the user/pilot, and/or otherwise implemented. Deadbands can be implemented in conjunction with a mechanical hardware mechanism, such as soft-stops at the boundaries of the deadband (e.g., for small displacements in opposing directions relative to the neutral position of the inceptor). Deadbands can additionally or alternatively include an input threshold, where departures below the threshold force/displacement are neglected. In a specific example, the sensor threshold for a deadband can exceed the magnitude of breakout force/displacement by at least a predetermined margin of sensor error. However, the axes can include any other suitable deadbands and/or otherwise exclude deadbands.

The inceptor and/or one or more axes/inputs of the inceptor can be self-centering (returning to a neutral position by default), not self-centering (remain in a departed position), or otherwise suitably implemented.

The inceptor can be active or passive: it can provide force feedback (e.g., dynamically resist motion in one or more axes, vibrate, etc.), provide no force feedback, be configurable to provide force feedback (e.g., by a user/pilot), or otherwise operate.

In variants, the inceptor can include one or more endpoints of the haptic feedback mechanism, include a motor of the haptic feedback mechanism (e.g., for a passive inceptor), provide no haptic feedback, and/or be otherwise configured.

In variants, the inceptor can be located offboard the aircraft (such as for remotely piloted and/or unmanned aircrafts), can operate as part of a flight simulation, be a line replaceable unit (LRU), can be removable from the aircraft, can wirelessly communicate with the aircraft, and/or otherwise operate.

The aircraft control system 100 can include a haptic feedback mechanism which functions to communicate with the pilot via transmission of force. The haptic feedback mechanism can include one or more vibration mechanisms, which can function to alert the user by vibration of a haptic endpoint (such as an arm rest, the inceptor, seat, etc.). The vibration mechanism can alert the user and/or generate vibrations of any particular frequency, amplitude, and/or pattern of variation in frequency and/or amplitude. Vibrations can be generated by an eccentric rotating mass (ERM), linear resonant actuator (LRA), ultrasound beams (focal point localized on hand or finger without physical contact), and/or any other suitable device/mechanism. The vibration mechanism can be located inside the inceptor, at the top of the inceptor grip, in the middle of the inceptor grip, at the base of the inceptor grip, at a mounting surface of the inceptor or grip, at the hand rest mounting and/or pivot point, at the arm rest, and/or in any other suitable location. The vibration mechanism can operate at any suitable frequency, which can be <.4 Hz, .4 Hz, 1Hz, 10 Hz, 50Hz, 100Nz, 200Hz, 400Hz, 800Hz, >800Hz, any range bounded by the aforementioned values, and/or any other suitable frequency. The vibration mechanism can operate with any normalized amplitude, which can be <2G, 2G, 5G, 10G, 15G, 50G, 100G, >100G, any range bounded by the aforementioned values, and/or any other suitable normalized amplitude. In a first variant, a single actuator (or single vibration mechanism) vibrates the inceptor grip. In a second variant, there is one vibration mechanism per axis of the inceptor. In a third variant, there is one force feedback mechanism per axis of the inceptor.

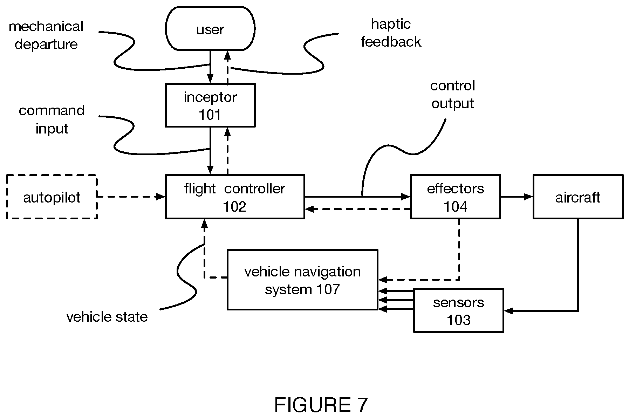

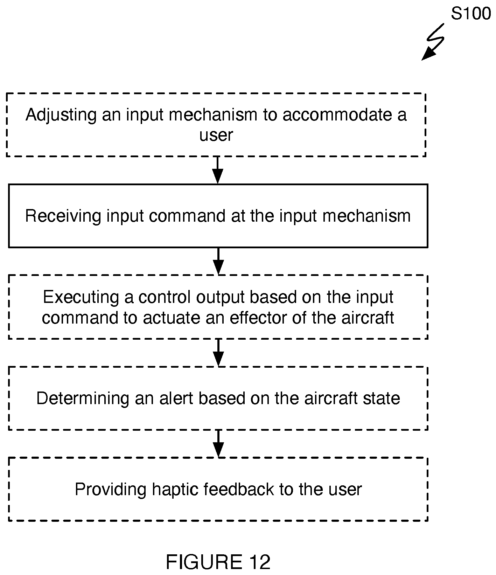

Haptic feedback mechanism and/or vibration mechanisms can communicate alerts to the pilot via an active or passive inceptor, and can be configured to generate haptic alerts related to one or more sensors or vehicle states (an example is shown in FIGURE 12). In specific example, the haptic feedback mechanism can be controlled by the flight controller 102 based on the vehicle state (an example is shown in FIGURE 7) as determined by the vehicle navigation system (VNS) 107 as described in US Application Number 16/721,523, filed 19 - DEC - 2019. Haptic feedback mechanism alerts can include sensor alerts (fuel level, range alert, cabin temperature, battery temperature, cabin pressure, etc.), collision avoidance alerts, autopilot or augmented mode alerts, traffic alerts, crew alerting systems (CAS), command model alerts, system health alerts, mode change alerts, general pilot alerts, and/or other suitable alerts.

Haptic feedback mechanism and/or vibration mechanisms can communicate alerts in decreasing order of priority/urgency and/or can communicate differing haptic alerts concurrently. In an example, haptic alerts can be communicated concurrently if a first alerts correspond to lower amplitude and/or lower frequency, and a second alert corresponds to higher amplitude, higher frequency, and/or a pattern, wherein the second alert is higher priority than first alert. Alternately, concurrent alerts can be sent to different haptic endpoints, communicated serially, or not be communicated (e.g., if lower priority).

Haptic alerts and/or vibrations can be communicated by any suitable vibration patterns, such as: uniformly maintain vibration characteristics (e.g., motor RPM) until alert is resolved, periodically engage/disengage a motor of the vibration mechanism, rapidly accelerate and/or decelerate the motor, communicate similar to Morse-code patterns (combination of dashes and dots, etc.), and/or generate any other suitable vibration patterns. Preferably, each vibration pattern corresponds to a distinct alert, however, a vibration pattern can correspond to multiple alerts, indicate that the pilot should look at a display (or other system specifying the alert type), correspond only to alter severity, correspond only to alert type, correspond to both alert type and severity, and/or otherwise suitably communicate with the user. There are preferably between 3 and 8 different haptic alert patterns associated, which maximizes the amount of haptic communication while maintaining a reasonably low cognitive load, but there can alternately be any suitable number of haptic alert types available.

However, the haptic feedback mechanism and/or vibration mechanism can be otherwise suitably implemented.

The aircraft control system 100 can optionally include an arm rest which functions to support the pilot's arm during manipulation of the inceptor. The arm rest can be adjustable (infinite adjustment or finite adjustment) or static (e.g., fixed in place). In some variants, the arm rest can be adjustable (an example is shown in FIGURE 14) which may allow it to be adjusted such that in a neutral position of the wrist and/or inceptor, a contact point of the forearm on the arm rest substantially aligned with a contact point of the hand blade against the hand rest, however the forearm can alternately be angled relative to the hand when contacting the arm rest, and/or otherwise adjusted. The arm rest can be manufactured from any suitable material, and can include a rubber coating or other padding for improved comfort. The arm rest can be flat, curved, arcuate, or have any other suitable geometry. Preferably, the arm rest is arranged to support the user's forearm, with the upper surface of the arm rest is in plane with the hand rest. The arm rest can be connected to the hand rest and/or inceptor, or mounted separately to a dashboard, pilot seat, and/or otherwise suitably mounted. The arm rest can optionally be connected to and/or include a vibration mechanism, and serve as a haptic feedback endpoint - which can communicate the same haptic alerts as the inceptor and/or different haptic alerts. However, the arm rest can otherwise be suitably implemented.

The aircraft control system 100 can include a flight controller which functions to receive command input from the input mechanisms and optionally, the one or more sensors, and functions generate control output(s) to affect the state of one or more effectors of the aircraft (e.g., to control the aerodynamic forces and/or moments on the aircraft, an example is shown in FIGURE 7). The flight processor can also function to implement a unified command model as described in US Application Number 16/708,367, filed 09 - DEC - 2019.

Inputs to the flight processor can include user input (e.g., command input) and vehicle state variables (e.g., aircraft position, aircraft positional change rates, forces on the aircraft, moments on the aircraft, speed, airspeed, groundspeed, etc.), guidance inputs (e.g., autopilot commands, waypoints, trajectory plans, flightpath, etc.), the current flight regime, and any other suitable inputs. Outputs (control outputs) from the flight processor can include target effector positions (e.g., angular positions of control surfaces, drive power for effector actuators, encoder states for effector actuators, etc.), and any other suitable outputs. The inputs are translated into outputs collectively by the command model and the control engine executing at the flight processor.

The aircraft control system 100 can include effectors which function to generate and/or adjust aerodynamic forces and/or moments on the aircraft, in response to control outputs received from the flight processor (e.g., generated according to a unified command model based on input received from a user). The effectors can include ailerons, ruddervators, flaps, propulsion units (e.g., tiltable propellers with variable blade pitch), and any other suitable control surfaces and/or actuatable mechanisms that can affect the flight of the aircraft. The effectors can also include actuators that actuate the control surface(s) of the effectors such as one or more: blade pitch mechanism, tilt mechanism, motor (by varying RPM), and/or other suitable actuator(s).

In a specific example, the effectors of the system include ailerons (e.g., 2 on each side of the aircraft), ruddervators (e.g., 3 on each side of the aircraft), flaps (e.g., 2 on each side of the aircraft), and propulsion unit associated effectors (e.g., 6 nacelle tilt actuators, motors with adjustable RPM, and propeller blades with variable pitch). Each effector is preferably associated with and coupled to a single actuator (e.g., a rotary actuator mounted on the hinge line of actuated control surfaces, a variable pitch linkage actuator, etc.) that positions the effector (or increases the rotary power delivered to other effectors, as in the case of the motor) in response to control output received from the flight processor. However, each effector can additionally or alternatively be associated with any suitable number of actuators.

The aircraft control system 100 can include one or more sensors to measure aircraft parameters which can be used to determine vehicles state and/or flight regime. Sensors can include fuel level, battery monitoring (e.g., SoC, voltage, power draw), air data sensors, temperature sensors (e.g., interior or exterior), altimeter, barometer, airspeed sensors, spatial sensors, proximity sensors, location sensors (e.g., GPS, GNSS, triangulation, trilateration, etc.), force sensors (e.g., strain gauge meter, load cell), and/or any other suitable sensors.

Alternative embodiments implement the above methods and/or processing modules in non-transitory computer-readable media, storing computer-readable instructions. The instructions can be executed by computer-executable components integrated with the computer-readable medium and/or processing system. The computer-readable medium may include any suitable computer readable media such as RAMs, ROMs, flash memory, EEPROMs, optical devices (CD or DVD), hard drives, floppy drives, non-transitory computer readable media, or any suitable device. The computer-executable component can include a computing system and/or processing system (e.g., including one or more collocated or distributed, remote or local processors) connected to the non-transitory computer-readable medium, such as CPUs, GPUs, TPUS, microprocessors, or ASICs, but the instructions can alternatively or additionally be executed by any suitable dedicated hardware device.

As a person skilled in the art will recognize from the previous detailed description and from the figures and claims, modifications and changes can be made to the preferred embodiments of the invention without departing from the scope of this invention defined in the following claims.

## Claims

1. A system for receiving inputs from a user for a fly-by-wire aircraft, the system comprising:
an inceptor mount (115) defining a neutral position, a base plane, and a plurality of primary axes comprising a twist axis orthogonal to the base plane;
a grip (110) connected to the inceptor mount at a first end, a length of the grip extending between the first end and a distal end;
for each primary axis:
a passive force-feedback mechanism (150) mechanically coupled to the inceptor mount about the primary axis, the passive force-feedback mechanism configured to provide varying displacement resistance based on a departure of the grip from the neutral position along the primary axis; and
a sensor (120) coupled to the inceptor mount and configured to determine an input along the primary axis based on the departure of the grip from the neutral position along the primary axis;
a hand rest (140) connected to the grip; and
a plurality of input components (130) mounted to the grip proximal to the distal end,
**characterised in that**
the hand rest (140) is adjustably connected to the grip and comprises a dorsal flange, the dorsal flange extending from a nadir section of the hand rest away from the base plane, wherein an anticlastic surface of the hand rest is configured to engage an ulnar border of a hand of the user while a plurality of fingers of the hand grasp the grip and a dorsal side of the hand contacts the dorsal flange, and wherein the anticlastic surface of the hand rest is saddle-shaped with a concave surface down along a length of the hand rest and concave surface up along a width of the hand rest.

2. The system of Claim 1, wherein the hand rest (140) defines a proximal side of the grip (110) and a distal side of the grip, wherein the grip further comprises a thenar rest (114) protruding from a spine of the grip and spanning a partial length of the grip between the first and distal ends, the thenar rest defining a groove (112) configured to engage a thenar eminence of the hand while the plurality of fingers of the hand grasp the grip.

3. The system of Claim 2, wherein the grip further comprises a textured fingertip contact pad (118) opposing the groove of the thenar rest (114) across a thickness of the thenar rest.

4. The system of Claim 1, wherein the hand rest (140) defines a proximal side of the grip (110) and a distal side of the grip, wherein the distal side of the grip comprises a pair of grip edges extending along a portion of the length of the grip, the pair of grip edges configured to engage pads of the plurality of fingers crosswise.

5. The system of Claim 4, wherein the pair of grip edges are arcuate, wherein the grip further comprises a monoclastic surface extending between the pair of grip edges.

6. The system of Claim 1, wherein the passive force-feedback mechanism (150) of each primary axis is spring-loaded to self-center at within a dead-band threshold of the neutral position, the dead-band threshold corresponding to a breakout torque in each primary axis, wherein the breakout torque of the twist axis is at least double the breakout torque of each of a remainder of the primary axes.

7. The system of Claim 1, wherein the passive force-feedback mechanism (150) comprises a soft-stop along each axis, wherein exceeding a torque threshold of the soft stop comprises a pilot confirmation.

8. The system of Claim 1, wherein the grip (110) is configured to be articulated in each primary axis without use of the thumb or index finger.

9. The system of Claim 8, wherein the primary axes comprise an inceptor pitch axis, wherein the plurality of input components comprises an index finger input component, a surface normal to the index finger input component lying in a plane cooperatively defined by the inceptor pitch axis and the twist axis.

10. The system of Claim 1, wherein the grip (110) comprises:
a spine extending from the first end and the distal end of the grip, wherein the grip is configured to be grasped about the spine by a third, fourth, and fifth digits of a hand of the user with a thumb and a second digit of the hand free;
a thenar rest (114) protruding from the spine of the grip and spanning a partial length of the grip between the first and distal ends, the thenar rest defining a syncline-shaped groove (112) configured to engage a thenar eminence of the hand, the thenar rest configured to receive a majority of clockwise torque about the twist axis under a wrist extension associated with the hand; and
a textured fingertip contact pad opposing the syncline-shaped groove of the thenar rest across a thickness of the thenar rest and configured to receive a majority of anti-clockwise torque about the twist axis; and
wherein the plurality of input components (130) is configured to receive inputs from the thumb and second digit of the hand.

11. The system of Claim 10, wherein a minimum distance between the twist axis and the textured fingertip contact pad defines a first vector, wherein a surface normal of the textured fingertip contact pad is at an angle between 50 and 120 degrees relative to the first vector.

12. The system of Claim 10, wherein the textured fingertip contact pad comprises a planar contact surface configured to engage a fingertip of each of a plurality of fingers of the hand grasping the grip.

13. The system of Claim 10, wherein a width of the syncline-shaped groove (112) defines a first vector in plane with a cross section of the grip parallel to the base plane, wherein the width of the syncline-shaped groove is substantially equal to a thickness of the grip in a direction orthogonal to the first vector.

14. The system of claim 1, wherein the hand rest (140) is pivotably connected to the grip (110) about an axis.

15. The system of claim 14, wherein the hand rest (140) comprises a distal flange configured to mount the hand rest (140) to the grip (110), wherein the distal flange serves as a pivot point for the hand rest (140) to be pivotably connected to the grip (110).

## Patentansprüche

1. Ein System zum Empfangen von Eingaben von einem Benutzer für ein Fly-by-Wire-Flugzeug, wobei das System Folgendes beinhaltet:
eine Inceptorhalterung (115), die eine neutrale Position, eine Basisebene und eine Vielzahl von Primärachsen definiert, die eine Torsionsachse orthogonal zu der Basisebene beinhalten;
einen Griff (110), der an einem ersten Ende mit der Inceptorhalterung verbunden ist,
wobei sich eine Länge des Griffs zwischen dem ersten Ende und einem distalen Ende erstreckt;
für jede Primärachse:
einen passiven Kraftrückkopplungsmechanismus (150), der mechanisch um die Primärachse mit der Inceptorhalterung gekoppelt ist, wobei der passive Kraftrückkopplungsmechanismus konfiguriert ist, um einen variierenden Verschiebungswiderstand basierend auf einer Abweichung des Griffs von der neutralen Position entlang der Primärachse bereitzustellen; und
einen Sensor (120), der mit der Inceptorhalterung gekoppelt ist und konfiguriert ist, um eine Eingabe entlang der Primärachse basierend auf der Abweichung des Griffs von der neutralen Position entlang der Primärachse zu bestimmen;
eine Handstütze (140), die mit dem Griff verbunden ist;
und
eine Vielzahl von Eingabekomponenten (130), die proximal zu dem distalen Ende an dem Griff montiert sind, **dadurch gekennzeichnet, dass**
die Handstütze (140) einstellbar mit dem Griff verbunden ist und einen dorsalen Flansch beinhaltet, wobei sich der dorsale Flansch von einem Nadirabschnitt der Handstütze weg von der Basisebene erstreckt, wobei eine antiklastische Oberfläche der Handstütze konfiguriert ist, um in einen Ulnarrand einer Hand des Benutzers einzugreifen, während eine Vielzahl von Fingern der Hand den Griff greifen und eine dorsale Seite der Hand den dorsalen Flansch berührt, und wobei die antiklastische Oberfläche der Handstütze sattelförmig mit einer konkaven Oberfläche nach unten entlang einer Länge der Handstütze und einer konkaven Oberfläche nach oben entlang einer Breite der Handstütze ist.

2. System gemäß Anspruch 1, wobei die Handstütze (140) eine proximale Seite des Griffs (110) und eine distale Seite des Griffs definiert, wobei der Griff ferner eine Thenarstütze (114) beinhaltet, die von einem Rücken des Griffs vorsteht und eine Teillänge des Griffs zwischen dem ersten und dem distalen Ende überspannt, wobei die Thenarstütze eine Nut (112) definiert, die konfiguriert ist, um in einen Handballen einzugreifen, während die Vielzahl von Fingern der Hand den Griff greifen.

3. System gemäß Anspruch 2, wobei der Griff ferner ein strukturiertes Fingerspitzenkontaktpad (118) beinhaltet, das der Nut der Thenarstütze (114) über eine Dicke der Thenarstütze gegenüberliegt.

4. System gemäß Anspruch 1, wobei die Handstütze (140) eine proximale Seite des Griffs (110) und eine distale Seite des Griffs definiert, wobei die distale Seite des Griffs ein Paar Griffkanten beinhaltet, die sich entlang eines Abschnitts der Länge des Griffs erstrecken, wobei das Paar Griffkanten konfiguriert ist, um kreuzweise in Pads der Vielzahl von Fingern einzugreifen.

5. System gemäß Anspruch 4, wobei das Paar Griffkanten bogenförmig ist, wobei der Griff ferner eine monoklastische Oberfläche beinhaltet, die sich zwischen dem Paar Griffkanten erstreckt.

6. System gemäß Anspruch 1, wobei der passive Kraftrückkopplungsmechanismus (150) jeder Primärachse federbelastet ist, um sich innerhalb eines Totbandschwellenwerts der neutralen Position selbst zu zentrieren, wobei der Totbandschwellenwert einem Ausfalldrehmoment in jeder Primärachse entspricht, wobei das Ausfalldrehmoment der Torsionsachse mindestens das Doppelte des Ausfalldrehmoments jeder eines Rests der Primärachsen beträgt.

7. System gemäß Anspruch 1, wobei der passive Kraftrückkopplungsmechanismus (150) einen Soft-Stop entlang jeder Achse beinhaltet, wobei das Überschreiten eines Drehmomentschwellenwerts des Soft-Stops eine Pilotenbestätigung beinhaltet.

8. System gemäß Anspruch 1, wobei der Griff (110) konfiguriert ist, um in jeder Primärachse ohne Verwendung des Daumens oder Zeigefingers artikuliert zu werden.

9. System gemäß Anspruch 8, wobei die Primärachsen eine Inceptornickachse beinhalten, wobei die Vielzahl von Eingabekomponenten eine Zeigefingereingabekomponente beinhaltet, wobei eine Oberfläche normal zu der Zeigefingereingabekomponente in einer Ebene liegt, die durch die Inceptornickachse und die Torsionsachse zusammenwirkend definiert ist.

10. System gemäß Anspruch 1, wobei der Griff (110) Folgendes beinhaltet:
einen Rücken, der sich von dem ersten Ende und dem distalen Ende des Griffs erstreckt, wobei der Griff konfiguriert ist, um von einem dritten, vierten und fünften Finger einer Hand des Benutzers um den Rücken ergriffen zu werden, wobei ein Daumen und ein zweiter Finger der Hand frei sind;
eine Thenarstütze (114), die von dem Rücken des Griffs vorsteht und eine Teillänge des Griffs zwischen dem ersten und dem distalen Ende überspannt, wobei die Thenarstütze eine synklinalenförmige Nut (112) definiert, die konfiguriert ist, um in einen Handballen einzugreifen, wobei die Thenarstütze konfiguriert ist, um einen Großteil eines Drehmoments im Uhrzeigersinn um die Torsionsachse unter einer Handgelenkverlängerung, die mit der Hand assoziiert ist, zu empfangen; und
ein strukturiertes Fingerspitzenkontaktpad, das der synclinienförmigen Nut der Thenarstütze über eine Dicke der Thenarstütze gegenüberliegt und konfiguriert ist, um einen Großteil eines Drehmoments gegen den Uhrzeigersinn um die Torsionsachse zu empfangen; und
wobei die Vielzahl von Eingabekomponenten (130) konfiguriert ist, um Eingaben von dem Daumen und dem zweiten Finger der Hand zu empfangen.

11. System gemäß Anspruch 10, wobei ein Mindestabstand zwischen der Torsionsachse und dem strukturierten Fingerspitzenkontaktpad einen ersten Vektor definiert, wobei eine Oberflächennormale des strukturierten Fingerspitzenkontaktpads in einem Winkel zwischen 50 und 120 Grad relativ zu dem ersten Vektor liegt.

12. System gemäß Anspruch 10, wobei das strukturierte Fingerspitzenkontaktpad eine planare Kontaktfläche beinhaltet, die konfiguriert ist, um in eine Fingerspitze jedes einer Vielzahl von Fingern der Hand, die den Griff greift, einzugreifen.

13. System gemäß Anspruch 10, wobei eine Breite der synklinalenförmigen Nut (112) einen ersten Vektor in einer Ebene mit einem Querschnitt des Griffs parallel zu der Basisebene definiert, wobei die Breite der synklinalenförmigen Nut im Wesentlichen gleich einer Dicke des Griffs in einer Richtung orthogonal zu dem ersten Vektor ist.

14. System gemäß Anspruch 1, wobei die Handstütze (140) um eine Achse schwenkbar mit dem Griff (110) verbunden ist.

15. System gemäß Anspruch 14, wobei die Handstütze (140) einen distalen Flansch beinhaltet, der konfiguriert ist, um die Handstütze (140) an dem Griff (110) zu montieren, wobei der distale Flansch als ein Drehpunkt für die Handstütze (140) dient, um schwenkbar mit dem Griff (110) verbunden zu sein.

## Revendications

1. Un système pour recevoir des entrées d'un utilisateur pour un aéronef à commandes de vol électriques, le système comprenant :
une monture d'incepteur (115) définissant une position neutre, un plan de base, et une pluralité d'axes primaires comprenant un axe de torsion orthogonal au plan de base ;
une poignée (110) raccordée à la monture d'incepteur au niveau d'une première extrémité, une longueur de la poignée s'étendant entre la première extrémité et une extrémité distale ;
pour chaque axe primaire :
un mécanisme de retour d'effort passif (150) couplé mécaniquement à la monture d'incepteur autour de l'axe primaire, le mécanisme de retour d'effort passif étant configuré pour fournir une résistance au déplacement variable sur la base d'une déviation de la poignée par rapport à la position neutre le long de l'axe primaire ; et
un capteur (120) couplé à la monture d'incepteur et configuré pour déterminer une entrée le long de l'axe primaire sur la base de la déviation de la poignée par rapport à la position neutre le long de l'axe primaire ;
un repose-main (140) raccordé à la poignée ;
et
une pluralité de composants d'entrée (130) montés sur la poignée à proximité de l'extrémité distale, **caractérisé en ce que**
le repose-main (140) est raccordé de manière ajustable à la poignée et comprend un rebord dorsal, le rebord dorsal s'étendant à partir d'une section nadirale du repose-main en s'éloignant du plan de base, dans lequel une surface anticlastique du repose-main est configurée pour se mettre en engagement avec une bordure ulnaire d'une main de l'utilisateur tandis qu'une pluralité de doigts de la main agrippent la poignée et qu'un côté dorsal de la main entre en contact avec le rebord dorsal, et dans lequel la surface anticlastique du repose-main est en forme de selle avec une surface concave vers le bas sur une longueur du repose-main et une surface concave vers le haut sur une largeur du repose-main.

2. Le système de la revendication 1, dans lequel le repose-main (140) définit un côté proximal de la poignée (110) et un côté distal de la poignée, dans lequel la poignée comprend en outre un repose thénar (114) faisant saillie à partir d'un tronc de la poignée et couvrant une longueur partielle de la poignée entre les première extrémité et extrémité distale, le repose thénar définissant une rainure (112) configurée pour se mettre en engagement avec une éminence thénar de la main tandis que la pluralité de doigts de la main agrippent la poignée.

3. Le système de la revendication 2, dans lequel la poignée comprend en outre un tampon de contact pour bout de doigt texturé (118) opposé à la rainure du repose thénar (114) de part et d'autre d'une épaisseur du repose thénar.

4. Le système de la revendication 1, dans lequel le repose-main (140) définit un côté proximal de la poignée (110) et un côté distal de la poignée, dans lequel le côté distal de la poignée comprend une paire de bords de poignée s'étendant le long d'une portion de la longueur de la poignée, la paire de bords de poignée étant configurée pour se mettre en engagement avec des pulpes de la pluralité de doigts dans le sens transversal.

5. Le système de la revendication 4, dans lequel la paire de bords de poignée sont arqués, dans lequel la poignée comprend en outre une surface monoclastique s'étendant entre la paire de bords de poignée.

6. Le système de la revendication 1, dans lequel le mécanisme de retour d'effort passif (150) de chaque axe primaire est chargé par ressort pour s'auto-centrer à l'intérieur d'un seuil de zone morte de la position neutre, le seuil de zone morte correspondant à un couple de rupture dans chaque axe primaire, dans lequel le couple de rupture de l'axe de torsion est au moins le double du couple de rupture de chacun d'un reste des axes primaires.

7. Le système de la revendication 1, dans lequel le mécanisme de retour d'effort passif (150) comprend une butée souple le long de chaque axe, dans lequel le dépassement d'un seuil de couple de la butée souple comprend une confirmation de pilote.

8. Le système de la revendication 1, dans lequel la poignée (110) est configurée pour être articulée dans chaque axe primaire sans l'utilisation du pouce ou de l'index.

9. Le système de la revendication 8, dans lequel les axes primaires comprennent un axe de tangage d'incepteur, dans lequel la pluralité de composants d'entrée comprend un composant d'entrée d'index, une surface normale au composant d'entrée d'index se trouvant dans un plan défini de manière coopérative par l'axe de tangage d'incepteur et l'axe de torsion.

10. Le système de la revendication 1, dans lequel la poignée (110) comprend :
un tronc s'étendant à partir de la première extrémité et de l'extrémité distale de la poignée, dans lequel la poignée est configurée pour être agrippée autour du tronc par des troisième, quatrième et cinquième doigts d'une main de l'utilisateur en laissant un pouce et un deuxième doigt de la main libres ;
un repose thénar (114) faisant saillie à partir du tronc de la poignée et couvrant une longueur partielle de la poignée entre les première extrémité et extrémité distale, le repose thénar définissant une rainure de forme synclinale (112) configurée pour se mettre en engagement avec une éminence thénar de la main, le repose thénar étant configuré pour recevoir une majeure partie du couple dans le sens des aiguilles d'une montre autour de l'axe de torsion sous une extension de poignet associée à la main ; et
un tampon de contact pour bout de doigt texturé opposé à la rainure de forme synclinale du repose thénar de part et d'autre d'une épaisseur du repose thénar et configuré pour recevoir une majeure partie du couple dans le sens inverse des aiguilles d'une montre autour de l'axe de torsion ; et
dans lequel la pluralité de composants d'entrée (130) est configurée pour recevoir des entrées du pouce et du deuxième doigt de la main.

11. Le système de la revendication 10, dans lequel une distance minimale entre l'axe de torsion et le tampon de contact pour bout de doigt texturé définit un premier vecteur, dans lequel une surface normale du tampon de contact pour bout de doigt texturé est à un angle compris entre 50 et 120 degrés par rapport au premier vecteur.

12. Le système de la revendication 10, dans lequel le tampon de contact pour bout de doigt texturé comprend une surface de contact plane configurée pour se mettre en engagement avec un bout de doigt de chacun d'une pluralité de doigts de la main agrippant la poignée.

13. Le système de la revendication 10, dans lequel une largeur de la rainure de forme synclinale (112) définit un premier vecteur dans un plan avec une section transversale de la poignée parallèle au plan de base, dans lequel la largeur de la rainure de forme synclinale est substantiellement égale à une épaisseur de la poignée dans une direction orthogonale au premier vecteur.

14. Le système de la revendication 1, dans lequel le repose-main (140) est raccordé de manière à pouvoir pivoter à la poignée (110) autour d'un axe.

15. Le système de la revendication 14, dans lequel le repose-main (140) comprend un rebord distal configuré pour monter le repose-main (140) sur la poignée (110), dans lequel le rebord distal sert de point de pivot pour que le repose-main (140) soit raccordé de manière à pouvoir pivoter à la poignée (110).
